# EUROPEAN PATENT APPLICATION

(11) **EP 4 783 669 A1**
(43) Date of publication of application: **29.07.2026**
(21) Application number: 24870578.2
(22) Date of filing: 19.09.2024
(51) Int. Cl.: H04W 36/08

(54) **COMMUNICATION METHOD AND APPARATUS**

(30) Priority: 25.09.2023 CN 202311252839
(71) Applicant: HUAWEI TECHNOLOGIES CO., LTD., Shenzhen 518129 (CN)
(72) Inventor: HUANG, Guogang, Shenzhen, Guangdong 518129 (CN)
(74) Representative: Körber, Martin Hans
(86) International application number: PCT/CN2024/119850
(87) International publication number: WO 2025/067034

(57) **Abstract**

This application provides a communication method and apparatus, to improve roaming performance of a non-access point multi-link device. In the method, a non-AP MLD receives a basic service set transition management BTM request sent by a current AP MLD. The BTM request may include function indication information of a candidate AP MLD, and the function indication information indicates whether the candidate AP MLD supports a tentative association operation. The non-AP MLD may initiate a tentative association operation for the candidate AP MLD based on the function indication information of the candidate AP MLD. This application is applied to a wireless local area network system that supports a next-generation Wi-Fi protocol of IEEE 802.11be, such as Wi-Fi 8, UHR, or 11bn, Wi-Fi AI, millimeter wave (mmWave), ultra-wideband (UWB), or sensing (sensing).

## Description

### CROSS-REFERENCE TO RELATED APPLICATIONS

This application claims priority to Chinese Patent Application No. 202311252839.X, filed with the China National Intellectual Property Administration on September 25, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Due to factors such as movement of a non-access point multi-link device (non-access point multi-link device, non-AP MLD), the non-AP MLD needs to switch an access point multi-link device (access point multi-link device, AP MLD) associated with the non-AP MLD.

In a process in which the AP MLD associated with the non-AP MLD is switched from a current AP MLD to a target AP MLD, that is, in a non-AP MLD roaming process, association operations such as negotiating for a key and a transmission capability parameter and establishing a block acknowledgment (block ack, BA) session need to be performed between the non-AP MLD and the target AP MLD. How to reduce a delay caused by performing the association operations and reduce impact on data transmission of the non-AP MLD is a problem that needs to be resolved in next-generation wireless fidelity (wireless fidelity, Wi-Fi) roaming.

### SUMMARY

Embodiments of this application provide a communication method and apparatus, to improve roaming performance of a non-AP MLD.

According to a first aspect, a communication method is provided. The method is performed by a non-access point multi-link device non-AP MLD, and the non-AP MLD is connected to a current access point multi-link device AP MLD. The communication method may include: The non-AP MLD receives a basic service set transition management BTM request sent by the current AP MLD, where the BTM request may include function indication information of a candidate AP MLD, the candidate AP MLD may be a neighboring AP MLD of the current AP MLD, and the function indication information indicates whether the candidate AP MLD supports a tentative association operation; and the non-AP MLD may initiate a tentative association operation for the candidate AP MLD based on the function indication information of the candidate AP MLD.

In the foregoing communication method, in a process of performing data transmission with the current AP MLD, the non-AP MLD may receive the BTM request sent by the current AP MLD. After receiving the BTM request, the non-AP MLD may initiate the tentative association operation for the candidate AP MLD based on the function indication information of the candidate AP MLD that is carried in the BTM request, and perform association operations, such as negotiating for a key, a capability parameter, and an operation parameter, and establishing a BA session, with the candidate AP MLD in advance before switching an associated AP MLD. When a roaming condition is triggered, the non-AP MLD may quickly switch a distributed system DS data path to an AP MLD that has established a tentative association operation, and perform data transmission. This reduces a delay caused by performing the association operation, and implements fast AP MLD switching.

The candidate AP MLD is the neighboring AP MLD of the current AP MLD. In other words, the function indication information of the neighboring AP MLD of the current AP MLD is carried in the BTM request sent by the current AP MLD to the non-AP MLD. In the process of performing data transmission with the current AP MLD, the non-AP MLD may receive the BTM request sent by the current AP MLD, to determine whether the neighboring AP MLD of the current AP MLD supports the tentative association operation. The non-AP MLD does not need to determine, by switching a channel to listen to a beacon frame sent by the neighboring AP MLD, whether the neighboring AP MLD supports the tentative association operation, and normal data transmission between the non-AP MLD and the current AP MLD is not affected, thereby improving roaming performance of the non-AP MLD.

In an optional implementation, the function indication information of the candidate AP MLD is carried in a neighbor report element field of the BTM request.

In an optional implementation, the function indication information may include a first function indication bit, the first function indication bit indicates whether the candidate AP MLD supports a first-type tentative association operation, and the first-type tentative association operation is a tentative association operation performed through an air interface. If the first function indication bit indicates that the corresponding candidate AP MLD supports the first-type tentative association operation, the tentative association operation is performed for the candidate AP MLD through the air interface.

In the foregoing implementation, the first function indication bit indicates whether the corresponding candidate AP MLD supports performing the tentative association operation through the air interface, and the non-AP MLD may determine, based on a first function indication bit corresponding to each candidate AP MLD, whether each candidate AP MLD supports performing the tentative association operation through the air interface. This helps the non-AP MLD select an appropriate AP MLD from candidate AP MLDs that support performing the tentative association operation through the air interface, to perform the tentative association operation in advance, to reduce a delay caused by performing an association operation during AP MLD switching.

In another optional implementation, the function indication information may include a second function indication bit, the second function indication bit indicates whether the candidate AP MLD supports a second-type tentative association operation, and the second-type tentative association operation is a tentative association operation performed through a distributed system DS. If the second function indication bit indicates that the corresponding candidate AP MLD supports the second-type tentative association operation, the tentative association operation is performed for the candidate AP MLD through the DS.

In the foregoing implementation, the second function indication bit indicates whether the corresponding candidate AP MLD supports performing the tentative association operation through the DS, and the non-AP MLD may determine, based on a second function indication bit corresponding to each candidate AP MLD, whether each candidate AP MLD supports performing the tentative association operation through the DS. This helps the non-AP MLD select an appropriate AP MLD from candidate AP MLDs that support performing the tentative association operation through the DS, to perform the tentative association operation in advance, to reduce a delay caused by performing an association operation during AP MLD switching. In addition, the non-AP MLD performs the tentative association operation with the candidate AP MLD through the DS. In a process of performing the tentative association operation, information exchanged between the non-AP MLD and the candidate AP MLD may be forwarded through the current AP MLD, and the non-AP MLD does not need to switch a channel to directly communicate with the candidate AP MLD through the air interface. Therefore, the process in which the non-AP MLD performs the tentative association operation with the candidate AP MLD through the DS does not affect normal data transmission between the non-AP MLD and the current AP MLD.

In another optional implementation, the function indication information may include the first function indication bit and the second function indication bit. If the first function indication bit indicates that the candidate AP MLD supports the first-type tentative association operation, and the second function indication bit indicates that the candidate AP MLD does not support the second-type tentative association operation, the tentative association operation is performed for the candidate AP MLD through the air interface. If the first function indication bit indicates that the candidate AP MLD supports the first-type tentative association operation, and the second function indication bit indicates that the candidate AP MLD supports the second-type tentative association operation, the tentative association operation is preferentially performed for the candidate AP MLD through the DS. The process in which the non-AP MLD performs the tentative association operation with the candidate AP MLD through the DS does not affect normal data transmission between the non-AP MLD and the current AP MLD.

In another optional implementation, the function indication information may include first indication information and second indication information. The first indication information may indicate whether the candidate AP MLD supports the tentative association operation, and the second indication information may indicate a type of the tentative association operation supported by the candidate AP MLD. The type of the tentative association operation may be a first type or a second type. The non-AP MLD may select an appropriate AP MLD from the candidate AP MLDs based on a type of the tentative association operation corresponding to each candidate AP MLD, to perform the tentative association operation in advance.

In an optional implementation, the second indication information may be specifically represented as the first function indication bit and the second function indication bit. In other words, the function indication information may include the first indication information, the first function indication bit, and the second function indication bit.

In an optional implementation, the BTM request may further include request mode indication information, and the request mode indication information may indicate the non-AP MLD to perform a tentative association operation or a basic service set BSS transition operation. If the request mode indication information indicates the non-AP MLD to perform the tentative association operation, the non-AP MLD may initiate the tentative association operation for the candidate AP MLD based on the function indication information of the candidate AP MLD. If the request mode indication information indicates the non-AP MLD to perform the basic service set BSS transition operation, the non-AP MLD may perform the BSS transition operation, to connect to a network through a target AP MLD after BSS transition.

In the foregoing implementation, the BTM request includes the request mode indication information, and the request mode indication information may indicate whether the non-AP MLD performs the tentative association operation or the BSS transition operation subsequently. Therefore, the current AP MLD may send the BTM request to the non-AP MLD, to notify, in advance by using the BTM request, the non-AP MLD to perform a tentative association operation with a recommended candidate AP MLD, and send the BTM request to the non-AP MLD when the roaming condition is triggered, to indicate the non-AP MLD to perform the BSS transition operation for AP MLD switching. The BTM request is used to notify, in advance, the non-AP MLD to perform the tentative association operation with the recommended candidate AP MLD, to avoid occurrence of a case in which in a fast movement scenario, before the non-AP MLD completes the tentative association operation, data transmission with the current AP MLD is interrupted due to poor link quality.

In an optional implementation, the request mode indication information may be carried in a request mode field of the BTM request.

According to a second aspect, a communication method is provided. The method is performed by a non-access point multi-link device non-AP MLD, and the non-AP MLD is connected to a current access point multi-link device AP MLD. The communication method may include: The non-AP MLD receives a basic service set transition management BTM request sent by the current AP MLD, where the BTM request may include request mode indication information, and the request mode indication information may indicate the non-AP MLD to perform a tentative association operation or a basic service set BSS transition operation; and if the request mode indication information indicates the non-AP MLD to perform the tentative association operation, the non-AP MLD initiates a tentative association operation for a candidate AP MLD.

In an optional implementation, if the request mode indication information indicates the non-AP MLD to perform the BSS transition operation, the non-AP MLD performs the BSS transition operation, to connect to a network through a target AP MLD after BSS transition.

In an optional implementation, the request mode indication information may be carried in a request mode field of the BTM request.

According to a third aspect, a communication method is provided. The method is performed by a current access point multi-link device AP MLD of a non-access point multi-link device non-AP MLD. The communication method may include: The current AP MLD sends a basic service set transition management BTM request to the non-AP MLD, where the BTM request includes function indication information of a candidate AP MLD, the candidate AP MLD is a neighboring AP MLD of the current AP MLD, and the function indication information indicates whether the candidate AP MLD supports a tentative association operation; and the current AP MLD receives a BTM response sent by the non-AP MLD.

In an optional implementation, the function indication information is carried in a neighbor report element field of the BTM request.

In an optional implementation, the function indication information may include a first function indication bit, the first function indication bit indicates whether the candidate AP MLD supports a first-type tentative association operation, and the first-type tentative association operation is a tentative association operation performed through an air interface.

In an optional implementation, the function indication information may include a second function indication bit, the second function indication bit indicates whether the candidate AP MLD supports a second-type tentative association operation, and the second-type tentative association operation is a tentative association operation performed through a distributed system DS.

In an optional implementation, the function indication information may include first indication information and second indication information. The first indication information may indicate whether the candidate AP MLD supports the tentative association operation, and the second indication information may indicate a type of the tentative association operation supported by the candidate AP MLD. The type of the tentative association operation may be a first type or a second type.

In an optional implementation, the BTM request may further include request mode indication information, and the request mode indication information may indicate the non-AP MLD to perform a tentative association operation or a basic service set BSS transition operation.

In an optional implementation, the request mode indication information may be carried in a request mode field of the BTM request.

According to a fourth aspect, a communication method is provided. The method is performed by a current access point multi-link device AP MLD of a non-access point multi-link device non-AP MLD. The communication method may include: The current AP MLD sends a basic service set transition management BTM request to the non-AP MLD, where the BTM request includes request mode indication information, the request mode indication information indicates the non-AP MLD to perform a tentative association operation or a basic service set BSS transition operation; and the current AP MLD receives a BTM response sent by the non-AP MLD.

In an optional implementation, the request mode indication information may be carried in a request mode field of the BTM request.

According to a fifth aspect, a communication apparatus is provided. The apparatus may be used in a non-access point multi-link device non-AP MLD, and the non-AP MLD is connected to a current access point multi-link device AP MLD. The communication apparatus may include:
a request receiving module, configured to receive a basic service set transition management BTM request sent by the current AP MLD, where the BTM request includes function indication information of a candidate AP MLD, the candidate AP MLD is a neighboring AP MLD of the current AP MLD, and the function indication information indicates whether the candidate AP MLD supports a tentative association operation; and
an association operation module, configured to initiate a tentative association operation for the candidate AP MLD based on the function indication information of the candidate AP MLD.

In an optional implementation, the function indication information of the candidate AP MLD is carried in a neighbor report element field of the BTM request.

In an optional implementation, the function indication information may include a first function indication bit, the first function indication bit indicates whether the candidate AP MLD supports a first-type tentative association operation, and the first-type tentative association operation is a tentative association operation performed through an air interface.

In an optional implementation, the association operation module may be specifically configured to: if the first function indication bit indicates that the corresponding candidate AP MLD supports the first-type tentative association operation, perform the tentative association operation for the candidate AP MLD through the air interface.

In an optional implementation, the function indication information may include a second function indication bit, the second function indication bit indicates whether the candidate AP MLD supports a second-type tentative association operation, and the second-type tentative association operation is a tentative association operation performed through a distributed system DS.

In an optional implementation, the association operation module may be specifically configured to: if the second function indication bit indicates that the corresponding candidate AP MLD supports the second-type tentative association operation, perform the tentative association operation for the candidate AP MLD through the DS.

In an optional implementation, the function indication information may include the first function indication bit and the second function indication bit, and the association operation module may be specifically configured to: if the first function indication bit indicates that the candidate AP MLD supports the first-type tentative association operation, and the second function indication bit indicates that the candidate AP MLD does not support the second-type tentative association operation, perform the tentative association operation for the candidate AP MLD through the air interface.

In an optional implementation, the function indication information may include first indication information and second indication information. The first indication information may indicate whether the candidate AP MLD supports the tentative association operation, and the second indication information may indicate a type of the tentative association operation supported by the candidate AP MLD. The type of the tentative association operation may be a first type or a second type.

In an optional implementation, the BTM request may further include request mode indication information, and the request mode indication information may indicate the non-AP MLD to perform a tentative association operation or a basic service set BSS transition operation. The association operation module may be specifically configured to: if the request mode indication information indicates the non-AP MLD to perform the tentative association operation, initiate the tentative association operation for the candidate AP MLD based on the function indication information of the candidate AP MLD.

In an optional implementation, the communication apparatus may further include a transition operation module, configured to: when the request mode indication information indicates the non-AP MLD to perform the basic service set BSS transition operation, perform the BSS transition operation, to connect to a network through a target AP MLD after BSS transition.

In an optional implementation, the request mode indication information may be carried in a request mode field of the BTM request.

According to a sixth aspect, a communication apparatus is provided. The apparatus may be used in a non-access point multi-link device non-AP MLD, and the non-AP MLD is connected to a current access point multi-link device AP MLD. The communication apparatus may include:
a request receiving module, configured to receive a basic service set transition management BTM request sent by the current AP MLD, where the BTM request includes request mode indication information, and the request mode indication information indicates the non-AP MLD to perform a tentative association operation or a basic service set BSS transition operation; and
an association operation module, configured to: if the request mode indication information indicates the non-AP MLD to perform the tentative association operation, initiate a tentative association operation for a candidate AP MLD, where the candidate AP MLD is a neighboring AP MLD of the current AP MLD.

In an optional implementation, the communication apparatus may further include a transition operation module, configured to: when the request mode indication information indicates the non-AP MLD to perform the basic service set BSS transition operation, perform the BSS transition operation, to connect to a network through a target AP MLD after BSS transition.

In an optional implementation, the request mode indication information may be carried in a request mode field of the BTM request.

According to a seventh aspect, a communication apparatus is provided. The apparatus may be used in a current access point multi-link device AP MLD of a non-access point multi-link device non-AP MLD. The communication apparatus may include:
a request sending module, configured to send a basic service set transition management BTM request to the non-AP MLD, where the BTM request includes function indication information of a candidate AP MLD, the candidate AP MLD is a neighboring AP MLD of the current AP MLD, and the function indication information indicates whether the candidate AP MLD supports a tentative association operation; and
a response receiving module, configured to receive a BTM response sent by the non-AP MLD.

In an optional implementation, the function indication information is carried in a neighbor report element field of the BTM request.

In an optional implementation, the function indication information may include a first function indication bit, the first function indication bit indicates whether the candidate AP MLD supports a first-type tentative association operation, and the first-type tentative association operation is a tentative association operation performed through an air interface.

In an optional implementation, the function indication information may include a second function indication bit, the second function indication bit indicates whether the candidate AP MLD supports a second-type tentative association operation, and the second-type tentative association operation is a tentative association operation performed through a distributed system DS.

In an optional implementation, the function indication information may include first indication information and second indication information. The first indication information may indicate whether the candidate AP MLD supports the tentative association operation, and the second indication information may indicate a type of the tentative association operation supported by the candidate AP MLD. The type of the tentative association operation may be a first type or a second type.

In an optional implementation, the BTM request may further include request mode indication information, and the request mode indication information may indicate the non-AP MLD to perform a tentative association operation or a basic service set BSS transition operation.

In an optional implementation, the request mode indication information may be carried in a request mode field of the BTM request.

According to an eighth aspect, a communication apparatus is provided. The apparatus may be used in a current access point multi-link device AP MLD of a non-access point multi-link device non-AP MLD. The communication apparatus may include:
a request sending module, configured to send a basic service set transition management BTM request to the non-AP MLD, where the BTM request includes request mode indication information, and the request mode indication information indicates the non-AP MLD to perform a tentative association operation or a basic service set BSS transition operation; and
a response receiving module, configured to receive a BTM response sent by the non-AP MLD.

In an optional implementation, the request mode indication information may be carried in a request mode field of the BTM request.

According to a ninth aspect, a communication device is provided. The communication device is a non-access point multi-link device non-AP MLD, and the non-AP MLD is connected to a current access point multi-link device AP MLD. The communication device includes a memory and a processor. The memory stores a computer program. The processor is configured to execute the computer program stored in the memory, to implement any method recorded in the first aspect or the second aspect.

According to a tenth aspect, a communication device is provided. The communication device is a current access point multi-link device AP MLD of a non-access point multi-link device non-AP MLD. The communication device includes a memory and a processor. The memory stores a computer program. The processor is configured to execute the computer program stored in the memory, to implement any method recorded in the third aspect or the fourth aspect.

According to an eleventh aspect, a communication system is provided, including a non-access point multi-link device non-AP MLD and an access point multi-link device AP MLD. The non-AP MLD may be configured to perform any method recorded in the first aspect or the second aspect, and the AP MLD may be configured to perform any method recorded in the third aspect or the fourth aspect.

According to a twelfth aspect, a computer-readable storage medium is provided. The computer-readable storage medium stores computer-executable instructions, and the computer-executable instructions are used to enable a computer to perform any method provided in the first aspect or the second aspect.

According to a thirteenth aspect, a computer-readable storage medium is provided. The computer-readable storage medium stores computer-executable instructions, and the computer-executable instructions are used to enable a computer to perform any method provided in the third aspect or the fourth aspect.

According to a fourteenth aspect, a computer program product is provided, including computer-executable instructions. The computer-executable instructions are used to enable a computer to perform any method provided in the first aspect or the second aspect.

According to a fifteenth aspect, a computer program product is provided, including computer-executable instructions. The computer-executable instructions are used to enable a computer to perform any method provided in the third aspect or the fourth aspect.

For technical effect that can be achieved in any one of the second aspect to the fifteenth aspect, refer to the descriptions of the beneficial effect in the first aspect. Details are not described herein again.

### BRIEF DESCRIPTION OF DRAWINGS

FIG. 1 is a diagram of a communication system according to an embodiment of this application;
FIG. 2 is a diagram of a structure of a non-AP MLD and an AP MLD according to an embodiment of this application;
FIG. 3 is a diagram of an application scenario according to an embodiment of this application;
FIG. 4 is a schematic flowchart of interaction between a non-AP MLD and a current AP MLD according to an embodiment of this application;
FIG. 5 is a diagram of a frame structure of a BTM request according to an embodiment of this application;
FIG. 6 is a diagram of a structure of a BSS termination duration subelement field in a BTM request according to an embodiment of this application;
FIG. 7 is a diagram of a structure of a neighbor report element field in a BTM request according to an embodiment of this application;
FIG. 8 is a schematic flowchart of interaction between a non-AP MLD, a current AP MLD, and a target AP MLD according to an embodiment of this application;
FIG. 9 is a diagram of a frame structure of a BTM query frame according to an embodiment of this application;
FIG. 10 is a diagram of a frame structure of a BTM response frame according to an embodiment of this application;
FIG. 11 is a diagram of a frame structure of an FT action frame according to an embodiment of this application;
FIG. 12 is another schematic flowchart of interaction between a non-AP MLD, a current AP MLD, and a target AP MLD according to an embodiment of this application;
FIG. 13 is another schematic flowchart of interaction between a non-AP MLD and a current AP MLD according to an embodiment of this application;
FIG. 14 is a diagram of a frame structure of another BTM request according to an embodiment of this application;
FIG. 15 is a block diagram of a structure of a communication apparatus according to an embodiment of this application;
FIG. 16 is a block diagram of a structure of another communication apparatus according to an embodiment of this application; and
FIG. 17 is a diagram of a structure of a communication device according to an embodiment of this application.

### DESCRIPTION OF EMBODIMENTS

To make objectives, technical solutions, and advantages of embodiments of this application clearer, the following further describes embodiments of this application in detail with reference to the accompanying drawings. Specific operation methods, function descriptions, and the like in method embodiments may also be applied to apparatus embodiments or system embodiments.

Before specific solutions provided in embodiments of this application are described, some terms in this application are explained and described, to facilitate understanding by a person skilled in the art, but not to limit the terms in this application.
(1) Multi-link device (multi-link device, MLD): A device that has a multi-link aggregation capability may be referred to as an MLD. For example, the device may have a plurality of radio frequency modules at the same time, and separately operates on different frequency bands/channels. When a spacing between channels on which two radio frequency modules in one device operate is large enough, the two radio frequency modules may operate independently without interfering with each other. In the IEEE 802.11 Wi-Fi extremely high throughput (extremely high throughput, EHT) scheme, the MLD is used to improve a transmission rate. In some embodiments, for any two links of the MLD, if sending on one link and receiving on the other link can be simultaneously performed, it is considered that the two links support a simultaneous transmit and receive (simultaneous transmit and receive, STR) capability. Otherwise, it is considered that the two links do not support a simultaneous transmit and receive capability. In other words, non-simultaneous transmit and receive (non-STR) are performed on the two links.
(2) Distributed system (distributed system, DS): The distributed system is configured to: interconnect a plurality of basic service sets (basic service sets, BSSs), and integrate a local area network (local area network, LAN), to construct an extended service set (extended service set, ESS). In other words, the DS may construct an ESS, and the ESS includes a plurality of interconnected BSSs. Alternatively, it is described as follows: The DS includes a plurality of interconnected BSSs. The BSS is a basic part of the local area network 802.11. For example, the DS may include a plurality of access point (access point, AP) MLDs, and each AP MLD or each AP in an AP MLD corresponds to one BSS.

Unless otherwise stated, in embodiments of this application, ordinal numbers such as "first" and "second" are used to distinguish between a plurality of objects, and not intended to limit a sequence, a time sequence, a priority, or an importance of the plurality of objects.

Embodiments of this application may be applied to a wireless local area network (wireless local area network, WLAN) system, and embodiments of this application may be applied to the institute of electrical and electronics engineers (institute of electrical and electronics engineers, IEEE) 802.11 series protocols such as 802.11be, 802.11bf, and a future 802.11 protocol used in a WLAN. A method provided in embodiments of this application may be implemented by a communication device in a wireless communication system, a chip or a circuit applied to a communication device, or the like. Correspondingly, the communication device supports communication by using the IEEE 802.11 series protocols. For example, the communication device supports a next-generation Wi-Fi protocol of IEEE 802.11be, such as Wi-Fi 8, UHR, and 11bn, or Wi-Fi AI, or a wireless local area network protocol for millimeter wave (mmWave), ultra-wideband (UWB), or sensing (sensing). Although embodiments of this application are mainly described by using a network deployed with IEEE 802.11 as an example, a person skilled in the art easily understands that aspects in embodiments of this application may be extended to other networks using various standards or protocols, for example, Bluetooth (BLUETOOTH), a high performance radio local area network (local area network, LAN) (high performance radio LAN, HIPERLAN) (a wireless standard similar to the IEEE 802.11 standard, mainly used in Europe), a wide area network (wide area network, WAN), a WLAN, a personal area network (personal area network, PAN), or another network that is known or developed later. The technical solutions in embodiments of this application may be applied to various cellular communication systems, for example, a 5th generation (5th generation, 5G) system, new radio (new radio, NR), and a future 6th generation (6th generation, 6G) system.

The communication method provided in embodiments of this application may be applied to the following communication system. The communication system may include at least one non-access point device and at least two access point devices. The non-access point device and the access point device may communicate with each other. The access point device may provide a wireless network access service for the non-access point device. The non-access point device may be referred to as a station (station, STA) device. In some embodiments, the non-access point device may be a multi-link device. When the non-access point device is a multi-link device, the non-access point device may be referred to as a non-access point (non-access point, non-AP) MLD, or may be referred to as a STA MLD. Similarly, the access point device may also be a multi-link device. When the access point device is a multi-link device, the access point device may be referred to as an AP MLD.

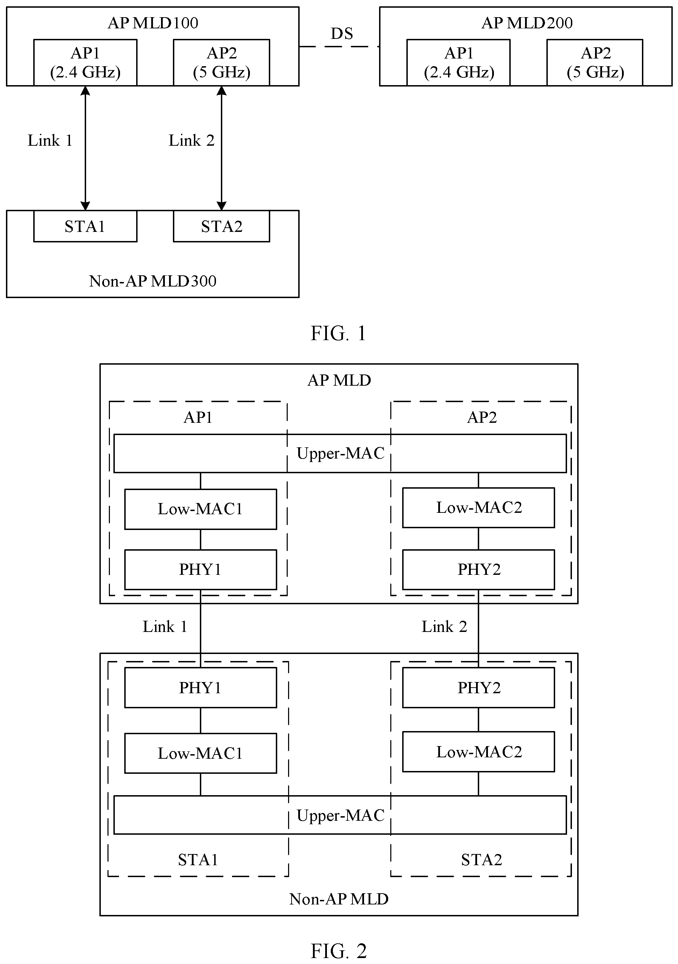

For example, in a communication system shown in FIG. 1, a non-AP MLD300 may communicate with an AP MLD100 and an AP MLD200. The non-AP MLD300 may be understood as a device having a wireless transceiver function. For example, the non-AP MLD may be a terminal device, user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. During specific application, the non-AP MLD may be a cellular phone, a mobile phone (mobile phone), a tablet computer (pad), a wearable device, a smart point of sale (point of sale, POS) machine, customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self-driving (self-driving), a terminal device in telemedicine (remote medical), a terminal device in a smart grid (smart grid), a terminal device in a smart city (smart city), a terminal in a smart home (smart home), or the like.

The non-AP MLD may include a plurality of links, and the plurality of links respectively correspond to different STA functions. A plurality of STA functions usually operate on different frequency bands or channels, and each STA function may be understood as a radio frequency module in the non-AP MLD. In the example in FIG. 1, the non-AP MLD300 includes two STA functions, which are respectively referred to as a STA1 and a STA2. Both the STA1 and the STA2 may operate on a 2.4 GHz frequency band and a 5 GHz frequency band. At a moment, the STA1 and the STA2 may operate on different frequency bands. In another embodiment, a quantity of STA functions included in the non-AP MLD may be greater than 2.

The AP MLD100 and the AP MLD200 each may be understood as a device like a wireless hub or a router that is configured to provide a wireless network access service, and may be used as an access point for the non-AP MLD to access a wired Ethernet backbone.

Similar to the non-AP MLD, the AP MLD may include a plurality of links. The plurality of links respectively correspond to different AP functions. A plurality of AP functions usually operate on different frequency bands or channels. Each AP function may be understood as a radio frequency transceiver module in the AP MLD. In the example shown in FIG. 1, the AP MLD100 and the AP MLD200 each include two AP functions, which are respectively referred to as an AP1 and an AP2. The AP1 and the AP2 operate on different frequency bands. The AP1 operates on the 2.4 GHz frequency band, and the AP2 operates on the 5 GHz frequency band. In some embodiments, the AP MLD100 and the AP MLD200, or the AP1 and the AP2 in the AP MLD100 and the AP1 and the AP2 in the AP MLD200 may belong to a same DS.

In a possible implementation, the communication system shown in FIG. 1 may further include a device like another non-AP MLD and/or another AP MLD, another device, or the like. This is not limited in this application.

In some embodiments, as shown in FIG. 2, the AP MLD or the non-AP MLD may include a physical layer (physical layer, PHY) (a PHY1 and a PHY2 shown in FIG. 2) and a media access control (medium access control, MAC) layer. The physical layer may be used to process a physical layer signal, and the MAC layer may be used to process a MAC layer signal. Further, the MAC layer may be further divided into an upper-MAC (upper-MAC, UMAC) layer (upper MAC shown in FIG. 2) and a plurality of low-MAC (low-MAC, LMAC) layers (low-MAC1 and low-MAC2 shown in FIG. 2). As shown in FIG. 2, the plurality of AP functions included in the AP MLD are independent of each other at the low-MAC layer and the PHY, and share the upper-MAC layer. The plurality of STA functions included in the non-AP MLD are independent of each other at the low-MAC layer and the PHY, and share the upper-MAC layer. The upper-MAC layer is separately connected to the plurality of low-MAC layers. In other words, the upper-MAC layer is shared by a plurality of links. Each link has its own MAC address at the LMAC layer of the MLD, and the MAC address corresponding to each link may be referred to as a link address (link address). In addition, each MLD also has a MAC address at the UMAC layer of the MLD, and the MAC address corresponding to the MLD may be referred to as an MLD MAC address (MLD address).

For example, the upper-MAC layer mainly completes operations such as sequence number (sequence number, SN) assignment, packet number (packet number, PN) assignment, and encryption/decryption on a MAC service data unit (MAC service data unit, MSDU). The low-MAC layer mainly completes operations such as assembly, channel access, and packet sending and receiving acknowledgment of a MAC protocol data unit (MAC protocol data unit, MPDU) of a link of the low-MAC layer.

In FIG. 2, in the AP MLD, the PHY1 layer, the low-MAC1 layer, and the upper-MAC layer may be considered as the AP1, and the PHY2 layer, the low-MAC2 layer, and the upper-MAC layer may be considered as the AP2. In other words, it may be understood that the AP MLD may include the plurality of AP functions, and the plurality of AP functions are independent of each other at the low-MAC layer and the PHY layer and share the upper-MAC layer. Similarly, in the non-AP MLD, the upper-MAC layer is also shared by the plurality of links, the PHY1 layer, the low-MAC1 layer, and the upper-MAC layer are considered as the STA1, and the PHY2 layer, the low-MAC2 layer, and the upper-MAC layer are considered as the STA2. In other words, it may be understood that the non-AP MLD may include the plurality of STA functions, and the plurality of STA functions are independent of each other at the low-MAC layer and the PHY layer and share the upper-MAC layer. The PHY1 of the AP1 in the AP MLD and the PHY1 of the STA1 in the non-AP MLD operate on a same channel, and the AP1 in the AP MLD and the STA1 in the non-AP MLD may implement communication through a link 1 shown in FIG. 2. The PHY2 of the AP2 in the AP MLD and the PHY2 of the STA2 in the non-AP MLD operate on another same channel, and the AP2 in the AP MLD and the STA2 in the non-AP MLD may implement communication through a link 2.

In a communication process, the non-AP MLD may be connected to a network through an AP MLD associated with the non-AP MLD. Due to factors such as movement of the non-AP MLD, the AP MLD associated with the non-AP MLD may be switched. For example, due to the movement of the non-AP MLD, the non-AP MLD moves from a coverage of an AP MLD1 to a coverage of an AP MLD2. In this case, the AP MLD associated with the non-AP MLD may need to be switched, and the switching process may also be referred to as roaming.

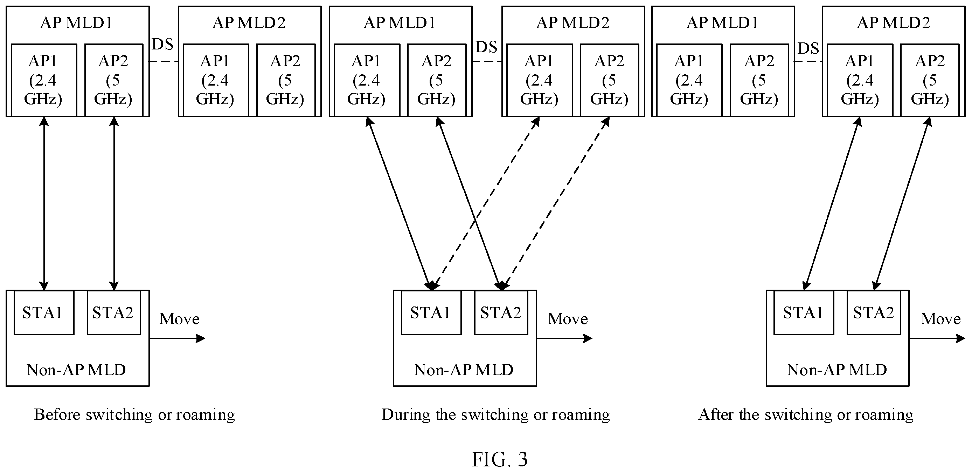

For example, FIG. 3 shows a possible process in which the AP MLD associated with the non-AP MLD switches from the AP MLD 1 to the AP MLD 2. As shown in FIG. 3, before the switching or roaming, the non-AP MLD is associated with the AP MLD1, and the AP MLD1 is referred to as a current AP MLD. For example, the STA1 of the non-AP MLD operates on the 2.4 GHz frequency band, and establishes a link with the AP1 of the AP MLD1. The STA2 of the non-AP MLD operates on the 5 GHz frequency band and establishes a link with the AP2 of the AP MLD1.

Due to factors such as the movement, the non-AP MLD moves out of a coverage area of the current AP MLD, namely, the AP MLD 1, and enters a coverage area of the AP MLD 2. For example, as shown in FIG. 3, in the switching or roaming process, the non-AP MLD performs tentative association with the AP MLD2, and establishes a link with the AP MLD2 and negotiates with the AP MLD2 in advance. The STA1 of the non-AP MLD establishes the link with the AP1 in the AP MLD2, and the STA2 of the non-AP MLD establishes the link with the AP2 in the AP MLD2.

As shown in FIG. 3, after a time point, the non-AP MLD switches a DS data path to the AP MLD2, that is, roams to the AP MLD2.

In an actual communication scenario, the AP MLD1 and the AP MLD2 may belong to a same DS. In other words, as the non-AP MLD moves, the AP MLD associated with the non-AP MLD may be switched from the current AP MLD to another adjacent AP MLD in the same DS. Because each AP MLD or each AP in the AP MLD corresponds to one BSS, the switching process may also be understood as a process in which the non-AP MLD switches from a current BSS to another adjacent BSS in a same ESS, and may be referred to as BSS transition or BSS switching.

In a process in which the non-AP MLD switches from the currently associated AP MLD to a target AP MLD, association operations such as negotiating for a key and a transmission capability parameter and establishing a BA session need to be performed between the non-AP MLD and the target AP MLD. These association operations increase a delay of the switching process.

This application provides the following embodiments, which are applied to the foregoing AP MLD switching scenario.

### [Embodiment 1]

In this embodiment of this application, before switching the associated AP MLD, the non-AP MLD may receive a basic service set transition management (BSS transition management, BTM) request sent by the current AP MLD, where the BTM request includes function indication information of a candidate AP MLD, the candidate AP MLD is a neighboring AP MLD of the current AP MLD, and the function indication information indicates whether the candidate AP MLD supports a tentative association operation. The non-AP MLD may initiate a tentative association operation for the candidate AP MLD based on the function indication information of the candidate AP MLD. In some application scenarios, the tentative association operation may also be referred to as a hot backup operation. In this embodiment of this application, in a process of performing data transmission with the current AP MLD, the non-AP MLD may receive the BTM request sent by the current AP MLD. Before and after the BTM request is received, normal data transmission between the non-AP MLD and the current AP MLD is not affected. This helps improve data transmission performance of a network. After receiving the BTM request, the non-AP MLD may initiate the tentative association operation for the candidate AP MLD based on the function indication information of the candidate AP MLD that is carried in the BTM request, and perform association operations, such as negotiating for a key, a capability parameter, and an operation parameter, and establishing a BA session, with the candidate AP MLD in advance before switching the associated AP MLD. When a roaming condition is triggered, the non-AP MLD may quickly perform data transmission with an AP MLD that has established a tentative association operation, to reduce a delay caused by performing the association operation, implement fast BSS transition, and reduce data transmission interruption time.

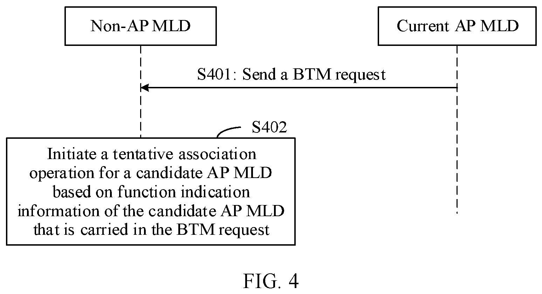

FIG. 4 is a flowchart of interaction between the non-AP MLD and the current AP MLD in a process of performing the tentative association operation. As shown in FIG. 4, the process may include the following steps.

S401: The current AP MLD sends the BTM request to the non-AP MLD.

There is a data transmission link between the non-AP MLD and the current AP MLD. If link quality of the non-AP MLD deteriorates, the current AP MLD may send the BTM request to the non-AP MLD, and recommend the non-AP MLD to switch to the adjacent AP MLD. The BTM request may include the function indication information of the candidate AP MLD, the candidate AP MLD is the neighboring AP MLD of the current AP MLD, and the function indication information indicates whether the candidate AP MLD supports the tentative association operation. The current AP MLD may determine, by using a notification message broadcast in the DS, or by querying the neighboring AP MLD, or by using information collected by the non-AP MLD through channel scanning, whether each neighboring AP MLD of the current AP MLD supports the tentative association operation. For example, the BTM request may include function indication information respectively corresponding to one or more candidate AP MLDs.

In some embodiments, the function indication information may include a first function indication bit indicating whether a corresponding candidate AP MLD supports a first-type tentative association operation. The first-type tentative association operation is a tentative association operation performed through an air interface (over-the-air), and may also be referred to as an over-the-air tentative association operation. The over-the-air tentative association operation means that the non-AP MLD may perform tentative association with a candidate AP MLD directly through the air interface. In a tentative association process, the non-AP MLD may establish a data transmission link with the candidate AP MLD. Transmission capability parameters of the non-AP MLD and the candidate AP MLD (for example, a transmission bandwidth and a maximum quantity of streams between the non-AP MLD and the candidate AP MLD), key information of the non-AP MLD and the candidate AP MLD (for example, a PTK, a group temporal key (group temporal key, GTK), an integrity group temporal key (integrity group temporal key, IGTK), and a beacon integrity group temporal key (beacon integrity group temporal key, BIGTK)), and resource allocation information of the non-AP MLD and the candidate AP MLD (for example, a BA session and restricted target wakeup time (restricted target wakeup time, r-TWT)) may be further negotiated.

For example, the first function indication bit may occupy 1 bit (bit) in the BTM request. If a value of the first function indication bit is "0", it may indicate that the corresponding candidate AP MLD does not support the over-the-air tentative association operation; or if a value of the first function indication bit is "1", it may indicate that the corresponding candidate AP MLD supports the over-the-air tentative association operation.

In some other embodiments, the function indication information may include a second function indication bit indicating whether the corresponding candidate AP MLD supports a second-type tentative association operation. The second-type tentative association operation is a tentative association operation performed through the DS (over-the-DS), and may also be referred to as an over-the-DS tentative association operation. Whether the over-the-DS tentative association operation is supported means whether the over-the-DS tentative association operation can be performed with the candidate AP MLD through the current AP MLD. For example, if a candidate AP MLD supports the over-the-DS tentative association operation, but the current AP MLD does not support the over-the-DS tentative association operation, a second function indication bit corresponding to the candidate AP MLD is accordingly set to indicate that the candidate AP MLD does not support the over-the-DS tentative association operation. Therefore, in other words, the second function indication bit indicates whether the over-the-DS tentative association operation can be performed with the candidate AP MLD through the current AP MLD. For example, if the current AP MLD does not support the over-the-DS tentative association operation, second function indication bits of all candidate AP MLDs included in the BTM request indicate that the corresponding candidate AP MLDs do not support the over-the-DS tentative association operation.

The over-the-DS tentative association operation means that the non-AP MLD may complete tentative association with a candidate AP MLD through the current AP MLD, establish a data transmission link with the candidate AP MLD, and negotiate transmission capability parameters, key information, and resource allocation information of the non-AP MLD and the candidate AP MLD, and the like.

For example, the second function indication bit may occupy 1 bit in the BTM request. If a value of the second function indication bit is "0", it may indicate that the corresponding candidate AP MLD does not support the over-the-DS tentative association operation, or the over-the-DS tentative association operation cannot be performed with the candidate AP MLD through the current AP MLD; or if a value of the second function indication bit is "1", it may indicate that the corresponding candidate AP MLD supports the over-the-DS tentative association operation, or the over-the-DS tentative association operation can be performed with the candidate AP MLD through the current AP MLD.

In the foregoing embodiment, the function indication information may include the first function indication bit or the second function indication bit.

In some other embodiments, the function indication information may include the first function indication bit and the second function indication bit. For example, if the value of the first function indication bit is "1", and the value of the second function indication bit is "0", it may indicate that the corresponding candidate AP MLD supports the over-the-air tentative association operation, but does not support the over-the-DS tentative association operation or the over-the-DS tentative association operation cannot be performed with the candidate AP MLD through the current AP MLD. If the value of the first function indication bit is "1", and the value of the second function indication bit is "1", it may indicate that the corresponding candidate AP MLD supports the over-the-air tentative association operation, and also supports the over-the-DS tentative association operation or the over-the-DS tentative association operation can be performed with the candidate AP MLD through the current AP MLD. If the value of the first function indication bit is "0", it indicates that the corresponding candidate AP MLD does not support the over-the-air tentative association operation, and it indicates that the corresponding candidate AP MLD does not support the tentative association operation. In this case, the value of the second function indication bit is also "0". In other words, when a candidate AP MLD does not support the over-the-air tentative association operation, the over-the-DS tentative association operation is not supported.

In some other embodiments, the function indication information may include first indication information and second indication information. The first indication information may indicate whether the corresponding candidate AP MLD supports the tentative association operation, and the second indication information may indicate a type of the tentative association operation supported by the corresponding candidate AP MLD. In an optional embodiment, the first indication information and the second indication information each may occupy 1 bit in the BTM request. If a value of the first indication information is "0", it may indicate that the corresponding candidate AP MLD does not support the tentative association operation. In this case, a value of the second indication information is meaningless. If a value of the first indication information is "1", it may indicate that the corresponding candidate AP MLD supports the tentative association operation. If a value of the first indication information is "1", and a value of the second indication information is "0", it may indicate that the corresponding candidate AP MLD supports the over-the-air tentative association operation. If a value of the first indication information is "1", and a value of the second indication information is "1", it may indicate that the corresponding candidate AP MLD supports the over-the-DS tentative association operation. In another optional embodiment, the second indication information may occupy 2 bits in the BTM request. If a value of the first indication information is "0", it may indicate that the corresponding candidate AP MLD does not support the tentative association operation, and a value of the second indication information may be "00". If a value of the first indication information is "1", it may indicate that the corresponding candidate AP MLD supports the tentative association operation. If a value of the first indication information is "1", and a value of the second indication information is "10", it may indicate that the corresponding candidate AP MLD supports the over-the-air tentative association operation. If a value of the first indication information is "1", and a value of the second indication information is "11", it may indicate that the corresponding candidate AP MLD supports the over-the-DS tentative association operation.

In some other embodiments, the second indication information may alternatively be represented as the first function indication bit and the second function indication bit. In other words, the function indication information may include the first indication information, the first function indication bit, and the second function indication bit. The first indication information, the first function indication bit, and the second function indication bit each may occupy 1 bit in the BTM request. If a value of the first indication information is "1", it may indicate that the corresponding candidate AP MLD supports the tentative association operation. If a value of the first indication information is "1", a value of the first function indication bit is "1", and a value of the second function indication bit is "0", it may indicate that the corresponding candidate AP MLD supports the over-the-air tentative association operation, but does not support the over-the-DS tentative association operation. If a value of the first indication information is "1", a value of the first function indication bit is "1", and a value of the second function indication bit is "1", it may indicate that the corresponding candidate AP MLD supports the over-the-air tentative association operation, and also supports the over-the-DS tentative association operation. If a value of the first indication information is "0", it indicates that the corresponding candidate AP MLD does not support the tentative association operation. In this case, values of the first function indication bit and the second function indication bit are both "0".

The following describes a frame format of the BTM request sent by the current AP MLD to the non-AP MLD. The BTM request may also be referred to as a BTM request (request) frame or a BTM request frame packet.

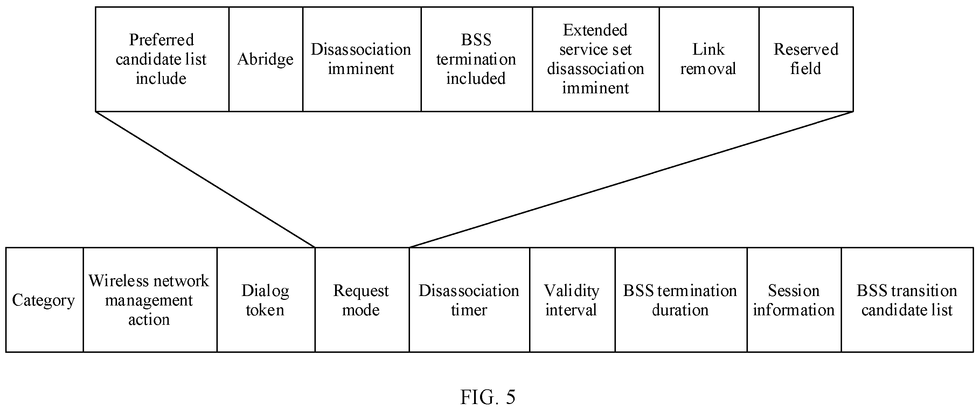

For example, in some embodiments, the frame format of the BTM request frame is shown in FIG. 5, and may include some or all of the following fields: a category (category) field, a wireless network management action (WNM action) field, a dialog token (dialog token) field, a request mode (request mode) field, a disassociation timer (disassociation timer) field, a validity interval (validity interval) field, a BSS termination duration (BSS termination duration) field, a session information (session info URL) field, and a BSS transition candidate list field.

The category field may indicate a category to which a corresponding frame packet belongs, for example, whether the frame packet is a query frame, a request frame, or a response frame.

The dialog token field may identify a correspondence between a request frame and a response frame. Dialog tokens carried in a pair of request frame and response frame have a same value.

The request mode field may indicate a specific request mode. The request mode field may include the following fields shown in FIG. 5: a preferred candidate list include (preferred candidate list include) field, an abridge (abridge) field, a disassociation imminent (disassociation imminent) field, a BSS termination included (BSS termination included) field, an extended service set disassociation imminent (ESS disassociation imminent) field, a link removal (Link Removal) field, and a reserved (reserved) field. The reserved field may occupy 2 bits.

In the request mode field, the preferred candidate list include field may indicate whether a preferred candidate list is carried. Abridge field: If the current AP MLD does not recommend or forbids the non-AP MLD to switch to a BSS that does not appear in the preferred candidate list, the abridge field is set to 0. If the current AP MLD sets a preference value (preference value) of the BSS that does not appear in the preferred candidate list to 0, the abridge field is set to 1. Disassociation imminent field: When the disassociation imminent field is set to 1, it indicates that the current AP MLD sends a disassociation frame to disassociate the STA of the non-AP MLD. When the disassociation imminent field is set to 0, it indicates that the current AP MLD does not send a disassociation frame to disassociate the STA. The BSS termination included field may indicate whether the BSS is disabled. The ESS disassociation imminent field may indicate whether the STA is disassociated from the entire ESS.

The disassociation timer field may indicate time after which the current AP MLD sends the disassociation frame, in a unit of TBTT.

The validity interval field may indicate a quantity of beacon (beacon) periods in which a BSS transition candidate list is valid.

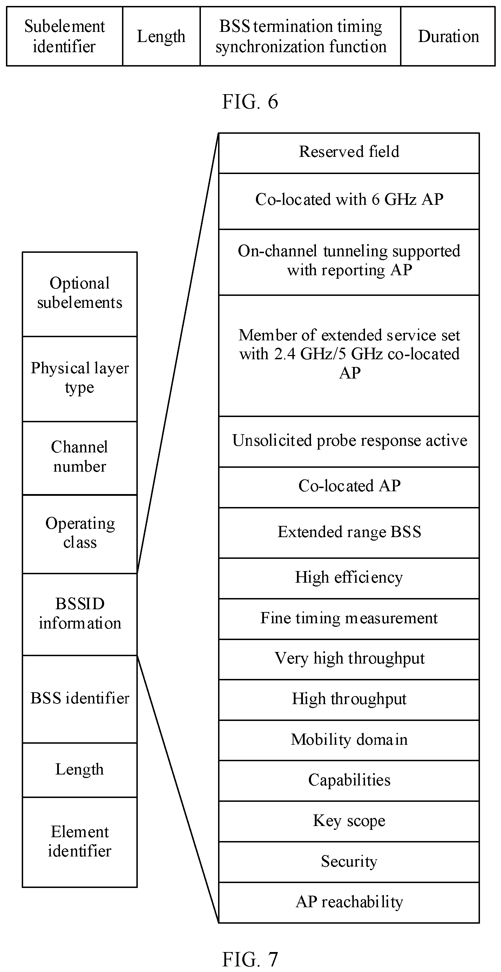

The BSS termination duration field may carry a BSS termination duration subelement (subelement). As shown in FIG. 6, the subelement may include a subelement identifier (subelement ID) field, a length (length) field, a BSS termination timing synchronization function (BSS termination TSF) field, and a duration (duration) field. The subelement identifier field occupies 1 octet (octet), and may indicate an identifier of the corresponding BSS termination duration subelement. The length field occupies 1 octet, and may indicate a length of the BSS termination duration field. The BSS termination TSF field may occupy 8 octets, and the BSS termination TSF field carries a value of a TSF timer, to indicate BSS termination time. The duration field may indicate BSS termination duration, in a unit of minutes. If the duration field is 0, it indicates that the field is reserved.

The BSS transition candidate list field may carry one or more neighbor report elements (neighbor report elements), each neighbor report element carries information about one candidate AP MLD, and the candidate AP MLD is a neighboring AP MLD of the current AP MLD. The candidate AP MLD may be an AP MLD recommended by the current AP MLD, and the non-AP MLD may select a target AP MLD from at least one recommended AP MLD. It may also be understood as that the BSS transition candidate list field may include information about one or more candidate AP MLDs, information about each candidate AP MLD includes function indication information for the candidate AP MLD, and the function indication information indicates whether the candidate AP MLD supports the tentative association operation.

In some embodiments, as shown in FIG. 7, each neighbor report element may include the following fields: an element identifier (element ID) field, a length (length) field, a BSS identifier (BSSID) field, a BSSID information (info) field, an operating class (operating class) field, a channel number (channel number) field, a physical layer type (PHY type) field, and an optional subelements (optional subelements) field.

The BSSID field may indicate a BSSID of the corresponding candidate AP MLD (neighboring AP MLD). The BSSID information field may indicate related information of the corresponding BSSID. The operating class field and the channel number field may indicate a channel to which the BSSID belongs. The PHY type field may indicate a physical layer type of the candidate AP MLD. The optional subelements field may include a basic multi-link subelement (basic multi-link subelement) field.

In an optional implementation, as shown in FIG. 7, the BSSID information field may include the following fields: an AP reachability (reachability) field, a security (security) field, a key scope (key scope) field, a capabilities (capabilities) field, a mobility domain (mobility domain) field, a high throughput (high throughput) field, a very high throughput (very high throughput) field, a fine timing measurement (fine timing measurement, FTM) field, a high efficiency (high efficiency) field, an extended range BSS (extended range BSS, ER BSS) field, a co-located AP (co-located AP) field, an unsolicited probe response active (unsolicited probe response active) field, a member of extended service set with 2.4 GHz/5 GHz co-located AP (member of extended service set with 2.4/5 GHz co-located AP) field, an on-channel tunneling (On-channel tunneling, OCT) supported with reporting AP (OCT supported with reporting AP) field, a co-located with 6 GHz AP (Co-located with 6 GHz AP) field, and a reserved field.

In this embodiment of this application, the BTM request includes the function indication information of the one or more candidate AP MLDs, and function indication information of each candidate AP MLD may be carried in a neighbor report element field corresponding to the candidate AP MLD. In other words, a neighbor report element field corresponding to a candidate AP MLD may include an identifier (the foregoing element identifier) of the candidate AP MLD and function indication information of the candidate AP MLD. For example, in some embodiments, function indication information of a candidate AP MLD may be carried in a reserved field of a neighbor report element field corresponding to the candidate AP MLD shown in FIG. 7. In some other embodiments, an MLD capabilities and operations subfield (MLD capabilities and operations subfield) may be set in the basic multi-link subelement field. Function indication information of a candidate AP MLD may be carried in an MLD capabilities and operations subfield in a basic multi-link subelement field of a neighbor report element field corresponding to the candidate AP MLD.

S402: The non-AP MLD initiates the tentative association operation for the candidate AP MLD based on the function indication information of the candidate AP MLD that is carried in the BTM request.

For example, the BTM request may include the function indication information of the one or more candidate AP MLDs. For each candidate AP MLD in the BTM request, the non-AP MLD may perform the following operation: obtaining the function indication information of the candidate AP MLD from the BTM request. If the function indication information indicates that the candidate AP MLD supports the first-type tentative association operation, namely, the over-the-air tentative association operation, the non-AP MLD may perform the over-the-air tentative association operation for the candidate AP MLD. If the function indication information indicates that the candidate AP MLD supports the second-type tentative association operation, namely, the over-the-DS tentative association operation, or the over-the-DS tentative association operation can be performed with the candidate AP MLD through the current AP MLD, the non-AP MLD may perform the over-the-DS tentative association operation for the candidate AP MLD. If the function indication information indicates that the candidate AP MLD supports both the over-the-air tentative association operation and the over-the-DS tentative association operation, or the over-the-DS tentative association operation can be performed with the candidate AP MLD through the current AP MLD, the non-AP MLD may preferentially perform the over-the-DS tentative association operation for the candidate AP MLD. If the function indication information indicates that the candidate AP MLD supports the over-the-air tentative association operation, but does not support the over-the-DS tentative association operation, or the over-the-DS tentative association operation cannot be performed with the candidate AP MLD through the current AP MLD, the non-AP MLD may perform the over-the-air tentative association operation for the candidate AP MLD. If the function indication information indicates that the candidate AP MLD does not support the tentative association operation, the non-AP MLD does not perform the tentative association operation for the candidate AP MLD.

In some embodiments, when the BTM request may include function indication information of a plurality of candidate AP MLDs, if at least two candidate AP MLDs that support the over-the-air tentative association operation exist in the plurality of candidate AP MLDs, the non-AP MLD may select at least one candidate AP MLD from the at least two candidate AP MLDs that support the over-the-DS tentative association operation, and perform the over-the-air tentative association operation for the selected candidate AP MLD. If at least two candidate AP MLDs that support the over-the-DS tentative association operation exist in the plurality of candidate AP MLDs, the non-AP MLD may select at least one candidate AP MLD from the at least two candidate AP MLDs that support the over-the-DS tentative association operation, and perform the over-the-DS tentative association operation for the selected candidate AP MLD.

In some other embodiments, when the BTM request may include function indication information of a plurality of candidate AP MLDs, if some candidate AP MLDs in the plurality of candidate AP MLDs support the over-the-DS tentative association operation, and some other candidate AP MLDs support the over-the-air tentative association operation or do not support the tentative association operation, the non-AP MLD may preferentially select at least one candidate AP MLD from the candidate AP MLDs that support the over-the-DS tentative association operation, and perform the over-the-DS tentative association operation for the selected candidate AP MLD. If some candidate AP MLDs in the plurality of candidate AP MLDs support the over-the-air tentative association operation, and some other candidate AP MLDs do not support the tentative association operation, the non-AP MLD may preferentially select at least one candidate AP MLD from the candidate AP MLDs that support the over-the-air tentative association operation, and perform the over-the-air tentative association operation for the selected candidate AP MLD.

In the foregoing embodiment, the BTM request sent by the current AP MLD to the non-AP MLD may include the function indication information of the candidate AP MLD, and the function indication information indicates whether the candidate AP MLD supports the tentative association operation. After receiving the BTM request, the non-AP MLD may initiate the tentative association operation for the candidate AP MLD based on the function indication information of the candidate AP MLD that is carried in the BTM request, and perform association operations, such as negotiating for a key, a capability parameter, and an operation parameter, and establishing a BA session, with the candidate AP MLD in advance before switching the associated AP MLD. When a roaming condition is triggered, the non-AP MLD may quickly perform data transmission with an AP MLD that has established a tentative association operation, to reduce a delay caused by performing the association operation, and implement fast BSS transition.

In some designs, before the non-AP MLD switches the associated AP MLD, when performing data transmission with the current AP MLD, the non-AP MLD needs to select a STA from the STA1 or the STA2, and switch the STA to a channel on which a secondary AP of the target AP MLD is located, to listen to a beacon (beacon) frame sent by the target AP MLD, and determine, based on indication information included in the beacon frame, whether the target AP MLD supports the tentative association operation. This process affects normal data transmission between the non-AP MLD and the current AP MLD. For an enhanced multi-link single radio (enhanced multi-link single radio, EMLSR) non-AP MLD, the EMLSR non-AP MLD may listen to a plurality of links simultaneously. When an initial control frame sent by the AP MLD is received, a radio frequency module of another link in an EMLSR link set may be switched to a corresponding link on which the initial control frame is received, to increase a quantity of receiving and sending streams. However, at any moment, the EMLSR non-AP MLD can select only one link to receive and send data. Compared with a multi-radio (radio) non-AP MLD, the EMLSR non-AP MLD has only one STA with complete functions and can receive and send data on only one link. Therefore, when the EMLSR non-AP MLD switches the channel to listen to the beacon frame sent by the target AP MLD, data transmission between the EMLSR non-AP MLD and the current AP MLD is interrupted.

In this embodiment of this application, the BTM request sent by the current AP MLD to the non-AP MLD carries the function indication information of the candidate AP MLD. In the process of performing data transmission with the current AP MLD, the non-AP MLD may receive the BTM request sent by the current AP MLD, and determine, based on the function indication information of the candidate AP MLD that is carried in the BTM request, whether the candidate AP MLD supports the over-the-air tentative association operation and whether the candidate AP MLD supports the over-the-DS tentative association operation. The non-AP MLD does not need to determine, by switching the channel to listen to a beacon frame sent by the neighboring AP MLD of the current AP MLD, whether the corresponding neighboring AP MLD supports the tentative association operation. Therefore, in this application, before and after the non-AP MLD receives the BTM request, normal data transmission between the non-AP MLD and the current AP MLD is not affected. Especially for the EMLSR non-AP MLD, interruption of data transmission between the EMLSR non-AP MLD and the current AP MLD can be avoided, roaming performance of the non-AP MLD can be improved, and data transmission performance of the network can be improved.

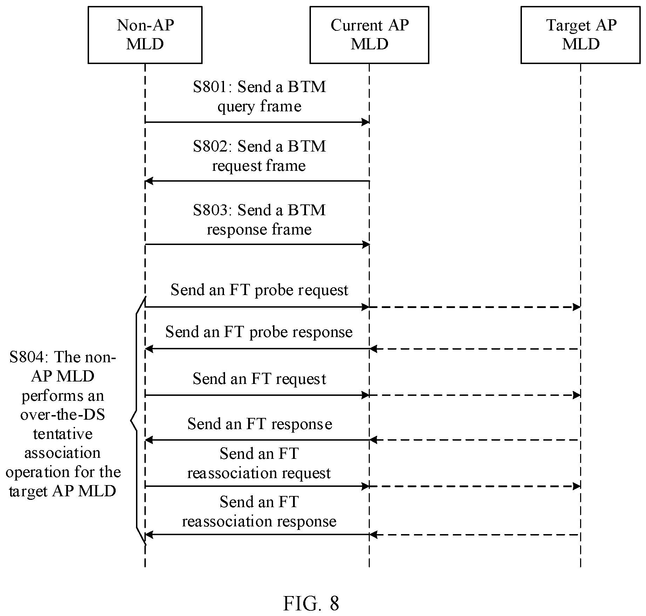

In some embodiments, before the current AP MLD sends the BTM request frame to the non-AP MLD, the non-AP MLD may send a BTM query (query) frame to the current AP MLD. FIG. 8 is a flowchart of interaction between the non-AP MLD, the current AP MLD, and the target AP MLD in a specific embodiment. The target AP MLD may be any AP MLD in the candidate AP MLDs. As shown in FIG. 8, the process may include the following steps.

S801: The non-AP MLD sends the BTM query frame to the current AP MLD.

There is a data transmission link between the non-AP MLD and the current AP MLD. If link quality of the non-AP MLD deteriorates, the non-AP MLD may send the BTM query (query) frame to the current AP MLD.

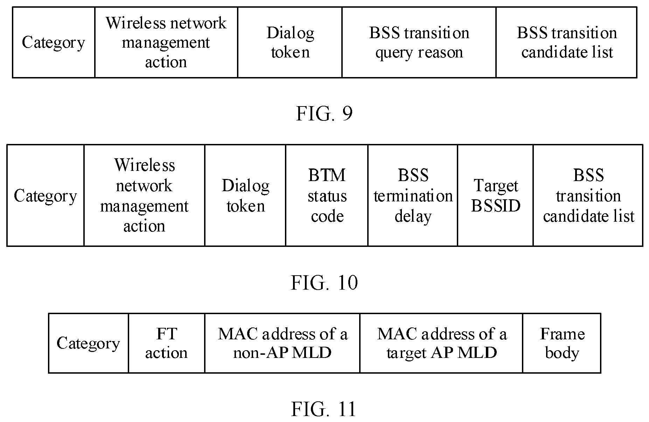

For example, a frame format of the BTM query frame is shown in FIG. 9, and may include some or all of the following fields: a category field, a wireless network management action field, a dialog token field, a BSS transition query reason (BSS transition query reason) field, and a BSS transition candidate list (BSS transition candidate list) field.

The category field may indicate a category to which a corresponding frame packet belongs, for example, whether the frame packet is a query frame or a request frame.

The BSS transition query reason field may indicate a reason for sending the BTM query frame. In an embodiment, for a structure of the BSS transition query reason field, refer to Table 1.

**Table 1**

| Value of the BSS transition query reason field | Description |
|---|---|
| 0 | Not specified |
| 1 | Excessively high packet loss rate or poor link quality |
| 2 | Excessively high delay |
| ... | ... |

As shown in Table 1, if the value of the BSS transition query reason field in the BTM query frame is 1, it indicates that the non-AP MLD sends the BTM query frame due to the excessively high packet loss rate or the poor link quality. If the value of the BSS transition query reason field in the BTM query frame is 2, it indicates that the delay of receiving or sending data is excessively high.

The BSS transition candidate list field is an optional field. If the BTM query frame carries the BSS transition candidate list field, the BSS transition candidate list field may carry information about the neighboring AP MLD that is of the current AP MLD and that is detected by the non-AP MLD.

The current AP MLD receives the BTM query frame sent by the non-AP MLD, and may reply with an acknowledgment (ACK) frame for the BTM query frame to the non-AP MLD.

S802: The current AP MLD sends the BTM request frame to the non-AP MLD.

After receiving the BTM query frame, the current AP MLD may send the BTM request frame to the non-AP MLD. The BTM request frame may include the function indication information respectively corresponding to the one or more candidate AP MLDs. For a frame format of the BTM request frame, refer to FIG. 5. Details are not described herein again.

The non-AP MLD receives the BTM request frame sent by the current AP MLD, and may reply with an ACK frame for the BTM request frame to the non-AP MLD.

S803: The non-AP MLD sends a BTM response frame to the current AP MLD.

The BTM response frame may also be referred to as a BTM response. For example, a frame format of the BTM response frame is shown in FIG. 10, and may include some or all of the following fields: a category field, a wireless network management action field, a dialog token field, a BTM status code (status code) field, a BSS termination delay (BSS termination delay) field, a target BSSID (target BSSID) field, and a BSS transition candidate list field.

The category field may indicate a category to which a corresponding frame packet belongs, for example, whether the frame packet is a query frame, a request frame, or a response frame.

The dialog token field may identify a correspondence between a request frame and a response frame. Dialog tokens carried in a pair of request frame and response frame have a same value.

The BSS termination delay may indicate duration of a time period from current time to BSS termination time.

The BTM status code field may indicate whether the BSS transition request is accepted. For example, a value of the BTM status code may be shown in Table 2.

**Table 2**

| Value of the BTM status code | Description |
|---|---|
| 0 | Accepted |
| 1 | Rejected due to an unknown reason |
| 2 | Rejected because a beacon frame of a candidate neighbor is received or a probe response is not enough |
| 3 | Rejected because an available capacity of the candidate neighbor is not enough |
| ... | ... |

As shown in Table 2, when the BSS transition request is accepted by the non-AP MLD, the value of the BTM status code is 0. When the BSS transition request is rejected by the non-AP MLD, rejection reasons can be identified by using different values of the BTM status code.

When the value of the BTM status code is 0, the BTM response frame may include the target BSSID field. The target BSSID is a BSSID that corresponds to the target AP MLD and that is selected by the non-AP MLD from the candidate AP MLDs carried in the BTM request frame.

The current AP MLD receives the BTM response frame sent by the non-AP MLD, and may reply with an ACK frame for the BTM response frame to the non-AP MLD.

In the embodiment shown in FIG. 8, it is assumed that the target AP MLD selected by the non-AP MLD from the candidate AP MLDs is an AP MLD that supports the over-the-DS tentative association operation. For example, in an optional embodiment, if the BTM request frame includes function indication information of a plurality of candidate AP MLDs, and at least two candidate AP MLDs that support the over-the-DS tentative association operation exist in the plurality of candidate AP MLDs, the non-AP MLD may select any one of the at least two candidate AP MLDs that support the over-the-DS tentative association operation as the target AP MLD. The candidate AP MLD that supports the over-the-DS tentative association operation means that the over-the-DS tentative association operation can be performed with the candidate AP MLD through the current AP MLD. After the target AP MLD is determined, the non-AP MLD may perform the over-the-DS tentative association operation for the target AP MLD.

S804: The non-AP MLD performs the over-the-DS tentative association operation for the target AP MLD.

The non-AP MLD may perform the tentative association operation with the target AP MLD through the current AP MLD.

For example, the non-AP may send a fast BSS transition (fast BSS transition, FT) probe request to the current AP MLD, where the FT probe request may be used to request to establish a data transmission link between the non-AP MLD and the target AP MLD. After receiving the FT probe request, the current AP MLD may transparently transmit the FT probe request to the target AP MLD through the DS. The target AP MLD may establish the data transmission link between the target AP MLD and the non-AP MLD based on the FT probe request. The data transmission link may be an air interface link between the non-AP MLD and the target AP MLD. The target AP MLD sends an FT probe response message to the current AP MLD through DS transparent transmission. The current AP MLD sends an FT probe response to the non-AP MLD.

Next, the non-AP MLD may send an FT request to the current AP MLD, and the current AP MLD transparently transmits the FT request to the target AP MLD through the DS. The FT request may be used to request a communication parameter of the target AP MLD. The target AP MLD sends an FT response to the current AP MLD through the DS, and the current AP MLD sends the FT response to the non-AP MLD. The FT response includes key information negotiated between the non-AP MLD and the target AP MLD.

The non-AP MLD may send an FT reassociation (reassociation) request to the current AP MLD, and the current AP MLD transparently transmits the FT reassociation request to the target AP MLD through the DS. The FT reassociation request may be used to negotiate for a link operation parameter and the like between the non-AP MLD and the target AP MLD. The target AP MLD sends an FT reassociation (reassociation) response to the current AP MLD through the DS, and the current AP MLD sends the FT reassociation response to the non-AP MLD. The FT reassociation response includes the link operation parameter and the like between the non-AP MLD and the target AP MLD.

In some embodiments, the FT query request, the FT query response, the FT request, the FT response, the FT reassociation request, the FT reassociation response, and the like in step S804 may be referred to as FT action frames. As shown in FIG. 11, a frame structure of the FT action frame may include some or all of the following fields: a category field, an FT action (action) field, a MAC address field of the non-AP MLD, a MAC address field of the target AP MLD, and a frame body (frame body) field.

The category field may indicate a category to which the FT action frame belongs. The FT action field may include a value corresponding to an FT action, and different values are set for FT action fields corresponding to different FT action frames. For example, refer to Table 3.

**Table 3**

| FT action field value (FT Action Field value) | Description (Description) |
|---|---|
| 0 | Reserved (Reserved) |
| 1 | FT request frames (FT Request frames) |
| 2 | FT response frames (FT Response frames) |
| 3 | FT confirm frames (FT Confirm frames) |
| 4 | FT acknowledgment frames (FT Ack frames) |
| 5 | FT probe request (FT Probe Request) |
| 6 | FT probe response (FT Probe Response) |
| 7 | FT reassociation request (FT Reassociation Request) |
| 8 | FT reassociation response (FT Reassociation Response) |
| 9 to 255 | Reserved (Reserved) |

It can be learned from Table 3 that, when the FT action frame in FIG. 11 is used as an FT reassociation request, a value of the FT action field is set to 7. For the foregoing FT query request, FT query response, FT request, FT response, and the like, a format of the FT action frame in FIG. 11 may be used. A difference is that the FT action field value in Table 3 is set to a corresponding value.

The MAC address field of the non-AP MLD includes a MAC layer address of the non-AP MLD, and the address may be an upper-MAC layer address, a low-MAC layer address, or the like of the non-AP MLD. The MAC address field of the target AP MLD includes a MAC layer address of the target AP MLD, and the address may be an upper-MAC layer address, a low-MAC layer address, or the like of the target AP MLD.

The frame body field may be used to carry a frame body corresponding to the FT action frame. Content of frame bodies carried in different FT action frames may be the same or different. This is not limited in embodiments of this application.

By using the foregoing steps, the non-AP MLD completes the tentative association operation with the target AP MLD, that is, the non-AP MLD has established an association with the target AP MLD. The non-AP MLD establishes the association with the target AP MLD in advance through the tentative association operation. When a BSS transition (or referred to as roaming) condition is triggered, the non-AP MLD activates the association with the target AP MLD, and may directly perform data transmission, to reduce a delay caused by performing an association operation between the non-AP MLD and the target AP MLD in a BSS transition process, and implement fast BSS transition.

In the embodiment shown in FIG. 8, the BTM request sent by the current AP MLD to the non-AP MLD carries the function indication information of the candidate AP MLD. In the process of performing data transmission with the current AP MLD, the non-AP MLD may receive the BTM request sent by the current AP MLD. The non-AP MLD determines, based on the function indication information of the candidate AP MLD that is carried in the BTM request, the target AP MLD that supports the over-the-DS tentative association operation, and perform the tentative association operation with the target AP MLD through the current AP MLD. This process completely does not need channel switching of a secondary STA of the non-AP MLD, so that it can be ensured that data transmission between the non-AP MLD and the current AP MLD is not interrupted, that is, normal data transmission between the non-AP MLD and the current AP MLD is not affected. This helps improve data transmission performance of the network.

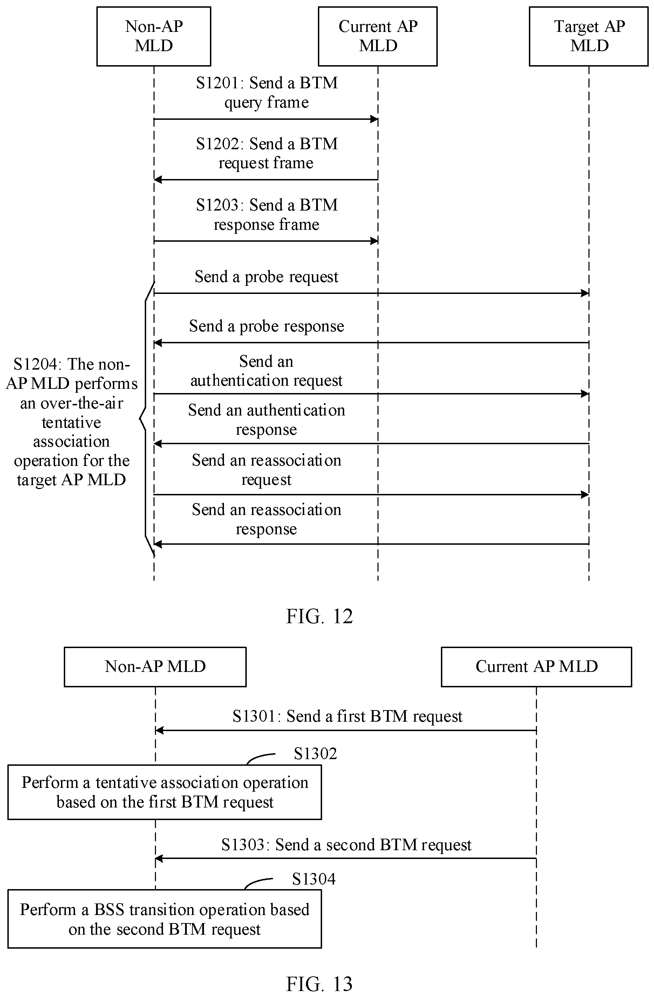

FIG. 12 is a flowchart of interaction between the non-AP MLD, the current AP MLD, and the target AP MLD in another specific embodiment. The target AP MLD may be any AP MLD in the candidate AP MLDs. As shown in FIG. 12, the process may include the following steps.

S1201: The non-AP MLD sends a BTM query frame to the current AP MLD.

A frame format of the BTM query frame may be as shown in FIG. 9. Details are not described herein again.

The current AP MLD receives the BTM query frame sent by the non-AP MLD, and may reply with an ACK frame for the BTM query frame to the non-AP MLD.

S1202: The current AP MLD sends the BTM request frame to the non-AP MLD.

The BTM request frame may include the function indication information respectively corresponding to the one or more candidate AP MLDs. For a frame format of the BTM request frame, refer to FIG. 5. Details are not described herein again.

The non-AP MLD receives the BTM request frame sent by the current AP MLD, and may reply with an ACK frame for the BTM request frame to the non-AP MLD.

S1203: The non-AP MLD sends a BTM response frame to the current AP MLD.

A frame format of the BTM response frame may be as shown in FIG. 10. Details are not described herein again.

The current AP MLD receives the BTM response frame sent by the non-AP MLD, and may reply with an ACK frame for the BTM response frame to the non-AP MLD.

In the embodiment shown in FIG. 12, it is assumed that the target AP MLD selected by the non-AP MLD from the candidate AP MLDs is an AP MLD that supports the over-the-air tentative association operation. For example, in an optional embodiment, if the BTM request frame includes function indication information of a plurality of candidate AP MLDs, and at least two candidate AP MLDs that support the over-the-air tentative association operation exist in the plurality of candidate AP MLDs, the non-AP MLD may select any one of the at least two candidate AP MLDs that support the over-the-air tentative association operation as the target AP MLD. The non-AP MLD may perform the over-the-air tentative association operation for the target AP MLD.

S1204: The non-AP MLD performs the over-the-air tentative association operation for the target AP MLD.

For example, the non-AP MLD may send a probe request to the target AP MLD, where the probe request may be used to request to establish a data transmission link between the non-AP MLD and the target AP MLD. The target AP MLD may establish the data transmission link between the target AP MLD and the non-AP MLD based on the probe request. The data transmission link may be an air interface link between the non-AP MLD and the target AP MLD. The target AP MLD may send a probe response to the non-AP MLD.

Next, the non-AP MLD may send an authentication request to the target AP MLD, where the authentication request may be used to request a communication parameter of the target AP MLD. The target AP MLD sends an authentication response to the non-AP MLD, where the authentication response includes key information negotiated between the non-AP MLD and the target AP MLD.

The non-AP MLD may send a reassociation request to the target AP MLD, where the reassociation request may be used to negotiate for a link operation parameter and the like between the non-AP MLD and the target AP MLD. The target AP MLD sends a reassociation response to the non-AP MLD, where the reassociation response includes the link operation parameter and the like between the non-AP MLD and the target AP MLD.

By using the foregoing steps, the non-AP MLD completes the tentative association operation with the target AP MLD, that is, the non-AP MLD has established an association with the target AP MLD. The non-AP MLD establishes the association with the target AP MLD in advance through the tentative association operation. When a BSS transition (or referred to as roaming) condition is triggered, the non-AP MLD activates the association with the target AP MLD, and may directly perform data transmission, to reduce a delay caused by performing an association operation between the non-AP MLD and the target AP MLD in a BSS transition process, and implement fast BSS transition.

In the embodiment shown in FIG. 12, the BTM request sent by the current AP MLD to the non-AP MLD carries the function indication information of the candidate AP MLD. In the process of performing data transmission with the current AP MLD, the non-AP MLD may receive the BTM request sent by the current AP MLD. The non-AP MLD may determine, based on the function indication information of the candidate AP MLD that is carried in the BTM request, the target AP MLD that supports the over-the-air tentative association operation. This helps the non-AP MLD select an appropriate neighboring AP MLD from the candidate AP MLDs to perform BSS transition.

### [Embodiment 2]

The non-AP MLD needs time to perform the tentative association operation. Therefore, if the non-AP MLD is notified to perform the tentative association operation with the recommended candidate AP MLD only when quality of the link between the non-AP MLD and the current AP MLD is already extremely poor, in a fast movement scenario, before the non-AP MLD completes the tentative association operation, data transmission with the current AP MLD is interrupted due to the poor link quality. Therefore, the current AP MLD may notify the non-AP MLD in advance to perform the tentative association operation with the recommended candidate AP MLD. To be specific, the current AP MLD may send the BTM request to the non-AP MLD in advance, to notify, in advance by using the BTM request, the non-AP MLD to perform the tentative association operation with the recommended candidate AP MLD. In some designs, after receiving the BTM request sent by the current AP MLD, the non-AP MLD usually performs BSS transition. To prevent the non-AP MLD from directly performing BSS transition each time the BTM request sent by the current AP MLD is received, in this embodiment of this application, the BTM request carries request mode indication information, where the request mode indication information indicates whether the non-AP MLD performs a tentative association operation or a BSS transition operation subsequently.

FIG. 13 is a flowchart of interaction between the non-AP MLD and the current AP MLD in a process of performing the tentative association operation. As shown in FIG. 13, the process may include the following steps.

S1301: The current AP MLD sends a first BTM request to the non-AP MLD.

There is a data transmission link between the non-AP MLD and the current AP MLD. If link quality of the non-AP MLD deteriorates, the current AP MLD may send the BTM request to the non-AP MLD, and recommend the non-AP MLD to switch to the adjacent AP MLD. The BTM request may include the request mode indication information. The request mode indication information may indicate the non-AP MLD to perform the tentative association operation or the BSS transition operation.

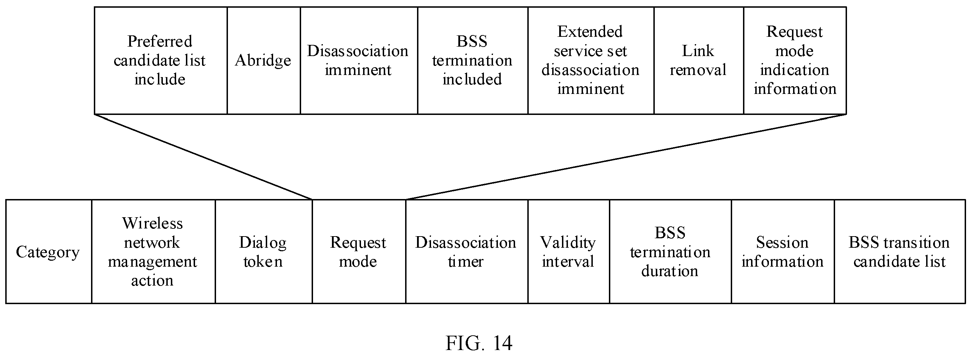

In some embodiments, the request mode indication information may be carried in a request mode field of the BTM request. As shown in FIG. 14, a frame format of the BTM request frame may include some or all of the following fields: a category field, a wireless network management action field, a dialog token field, a request mode field, a disassociation timer field, a validity interval field, a BSS termination duration field, a session information field, and a BSS transition candidate list field. The BSS transition candidate list carries information about the candidate AP MLD.

In an optional embodiment, a reserved field of the request mode field may carry the request mode indication information, and the request mode indication information may also be referred to as a tentative association request (tentative association request). The request mode indication information may occupy 1 bit. When a value of the request mode indication information is "0", it indicates that the BTM request is to notify the non-AP MLD to perform the tentative association operation, instead of enabling the non-AP MLD to immediately perform BSS transition. When a value of the request mode indication information is "1", it indicates that the BTM request is to notify the non-AP MLD to perform the BSS transition operation.

In another optional embodiment, it may be distinguished, by setting an existing field in the BTM request, whether to perform the tentative association operation or the BSS transition operation. For example, the request mode indication information may be carried in a disassociation imminent (disassociation imminent) field in the request mode field. When a value of the disassociation imminent field is "0", it indicates that the BTM request is to notify the non-AP MLD to perform the tentative association operation, instead of enabling the non-AP MLD to immediately perform BSS transition. When a value of the disassociation imminent field is "1", it indicates that the BTM request is to notify the non-AP MLD to perform the BSS transition operation.

In this embodiment, the current AP MLD sends the first BTM request to the non-AP MLD, where the first BTM request includes the request mode indication information. It is assumed that the value of the request mode indication information is "1", indicating the non-AP MLD to perform the tentative association operation.

S1302: The non-AP MLD performs the tentative association operation based on the first BTM request.

In some embodiments, the non-AP MLD receives the first BTM request sent by the current AP MLD, and may send a first BTM response to the current AP MLD. For the process, refer to FIG. 8 or FIG. 12. Details are not described herein again.

The non-AP MLD may initiate the tentative association operation for the candidate AP MLD based on the information about the candidate AP MLD that is carried in the BSS transition candidate list. For example, the non-AP MLD may select, from the candidate AP MLDs, the target AP MLD that supports the tentative association operation, and perform the tentative association operation for the target AP MLD.

In some embodiments, the non-AP MLD may perform the over-the-DS tentative association operation for the target AP MLD. For an operation process, refer to FIG. 8. In some other embodiments, the non-AP MLD may perform the over-the-air tentative association operation for the target AP MLD. For an operation process, refer to FIG. 12.

S1303: The current AP MLD sends a second BTM request to the non-AP MLD.

When it is determined that a BSS transition condition is met, the current AP MLD may send the second BTM request to the non-AP MLD. A frame format of the second BTM request may alternatively be a format shown in FIG. 14. The second BTM request may also include request mode indication information, and the request mode indication information may indicate the non-AP MLD to perform the tentative association operation or the BSS transition operation. It is assumed that a value of the request mode indication information in the second BTM request is "0", indicating the non-AP MLD to perform the BSS transition operation.

S1304: The non-AP MLD performs the BSS transition operation based on the second BTM request.

When determining that the request mode indication information in the second BTM request indicates the non-AP MLD to perform the BSS transition operation, the non-AP MLD may perform the BSS transition operation, to be connected to the network through the target AP MLD after BSS transition.

In some embodiments, the non-AP MLD may activate an association with the target AP MLD, trigger link switching, and switch a transmission link of the non-AP MLD from the current AP MLD to the target AP MLD. For example, the non-AP MLD sends a DS STA-to-AP mapping request frame (DS-STA-NOTIFY.request) to the target AP MLD, where the STA-to-AP mapping request frame may be used to request the target AP MLD to perform data path switching. The target AP MLD sends a context transfer request to the current AP MLD. After receiving the context transfer request, the current AP MLD may choose to sequentially deliver complete MSDUs in a receive buffer to the DS. After the delivery is complete, the current AP MLD sends a context transfer response (context transfer response) to the target AP MLD. Alternatively, after receiving the context transfer request, the current AP MLD immediately stops delivering an MSDU to the DS, and then the current AP MLD sends a context transfer response to the target AP MLD. The context transfer response includes context information of the non-AP MLD, for example, block acknowledgment protocol related information. In addition, data in the receive buffer is transferred to the target AP MLD. The non-AP MLD disconnects data transmission with the current AP MLD, and performs data transmission with the target AP MLD. The current AP MLD deletes the context information of the non-AP MLD. After data path switching, data transmission may be performed between the non-AP MLD and the target AP MLD, and the non-AP MLD may encrypt and decrypt transmitted data by using a key negotiated with the target AP MLD when performing the tentative association operation.

In the foregoing embodiment, the BTM request includes the request mode indication information, and the request mode indication information may indicate the non-AP MLD to perform the tentative association operation or the BSS transition operation subsequently. Therefore, the current AP MLD may send the BTM request to the non-AP MLD in advance, to notify, in advance by using the BTM request, the non-AP MLD to perform the tentative association operation with the recommended candidate AP MLD, thereby avoiding occurrence of a case in which in a fast movement scenario, before the non-AP MLD completes the tentative association operation, data transmission with the current AP MLD is interrupted due to the poor link quality.

Embodiment 1 and Embodiment 2 may be implemented separately, or may be implemented in a cross manner. For example, in Embodiment 2, the first BTM request may also include the function indication information of the candidate AP MLD recommended by the current AP MLD, to indicate whether the corresponding candidate AP MLD supports the tentative association operation. The non-AP MLD receives the first BTM request sent by the current AP MLD. If the request mode indication information in the first BTM request indicates the non-AP MLD to perform the tentative association operation, the non-AP MLD may perform the tentative association operation for the candidate AP MLD based on the function indication information of the candidate AP MLD that is carried in the first BTM request.

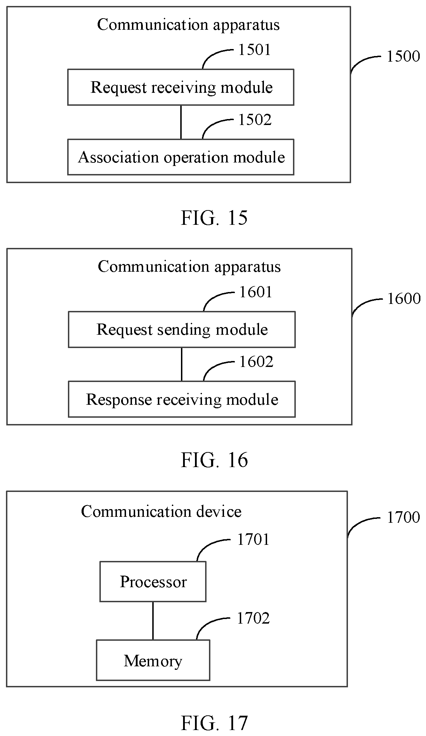

Based on a same design concept as the foregoing method embodiments, an embodiment of this application further provides a communication apparatus. The communication apparatus may be used in a non-AP MLD, for example, the non-AP MLD 300 shown in FIG. 1. The communication apparatus may be configured to implement the functions in the foregoing method embodiments, and therefore can implement the beneficial effect of the foregoing method embodiments. As shown in FIG. 15, the communication apparatus 1500 may include a request receiving module 1501 and an association operation module 1502.

In some embodiments, the request receiving module 1501 may be configured to receive a basic service set transition management BTM request sent by a current AP MLD, where the BTM request includes function indication information of a candidate AP MLD, the candidate AP MLD is a neighboring AP MLD of the current AP MLD, and the function indication information indicates whether the candidate AP MLD supports a tentative association operation. The association operation module 1502 may be configured to initiate a tentative association operation for the candidate AP MLD based on the function indication information of the candidate AP MLD.

In some other embodiments, the request receiving module 1501 may be configured to receive a basic service set transition management BTM request sent by a current AP MLD, where the BTM request includes request mode indication information, and the request mode indication information indicates the non-AP MLD to perform a tentative association operation or a basic service set BSS transition operation.

The association operation module 1502 may be configured to: if the request mode indication information indicates the non-AP MLD to perform the tentative association operation, initiate a tentative association operation for a candidate AP MLD, where the candidate AP MLD is a neighboring AP MLD of the current AP MLD.

In some embodiments, the communication apparatus 1500 may further include a transition operation module. The transition operation module may be configured to: when the request mode indication information indicates the non-AP MLD to perform the basic service set BSS transition operation, perform the BSS transition operation, to connect to a network through a target AP MLD after BSS transition.

It should be noted that, in another embodiment, the request receiving module 1501 may be configured to perform any step in the communication method, and the association operation module 1502 may be configured to perform any step in the communication method. Steps implemented by the request receiving module 1501 and the association operation module 1502 may be specified as required. The request receiving module 1501 and the association operation module 1502 separately implement different steps in the communication method to implement all functions of the communication apparatus.

Functional modules in embodiments of this application may be integrated into one processor, or each of the modules may exist alone physically, or two or more modules are integrated into one module. The integrated module may be implemented in a form of hardware, or may be implemented in a form of a software functional unit.

Based on a same design concept as the foregoing method embodiments, an embodiment of this application further provides a communication apparatus. The communication apparatus may be used in an AP MLD, for example, the AP MLD 100 or the AP MLD 200 shown in FIG. 1. The AP MLD is a current AP MLD of a non-AP MLD. The communication apparatus may be configured to implement functions in the foregoing method embodiments, and therefore can implement beneficial effect of the foregoing method embodiments. As shown in FIG. 16, the communication apparatus 1600 may include a request sending module 1601 and a response receiving module 1602.

In some embodiments, the request sending module 1601 may be configured to send a basic service set transition management BTM request to the non-AP MLD, where the BTM request includes function indication information of a candidate AP MLD, the candidate AP MLD is a neighboring AP MLD of the current AP MLD, and the function indication information indicates whether the candidate AP MLD supports a tentative association operation. The response receiving module 1602 may be configured to receive a BTM response sent by the non-AP MLD.

In some other embodiments, the request sending module 1601 may be configured to send a basic service set transition management BTM request to the non-AP MLD, where the BTM request includes request mode indication information, and the request mode indication information indicates the non-AP MLD to perform a tentative association operation or a basic service set BSS transition operation. The response receiving module 1602 may be configured to receive a BTM response sent by the non-AP MLD.

It should be noted that, in another embodiment, the request sending module 1601 may be configured to perform any step in the communication method, and the response receiving module 1602 may be configured to perform any step in the communication method. Steps implemented by the request sending module 1601 and the response receiving module 1602 may be specified as required, and the request sending module 1601 and the response receiving module 1602 separately implement different steps in the communication method to implement all functions of the communication apparatus.

Functional modules in embodiments of this application may be integrated into one processor, or each of the modules may exist alone physically, or two or more modules are integrated into one module. The integrated module may be implemented in a form of hardware, or may be implemented in a form of a software functional unit.

Based on a same technical concept as the foregoing method embodiments, an embodiment of this application further provides a communication device. The communication device may be a non-AP MLD or an AP MLD shown in FIG. 1. The communication device may be configured to implement the functions in the foregoing method embodiments, and therefore can implement the beneficial effect of the foregoing method embodiments.

In some embodiments, a structure of the communication device 1700 may be shown in FIG. 17, and includes a processor 1701 and a memory 1702 connected to the processor 1701. The processor 1701 and the memory 1702 may be connected to each other through a bus. The processor 1701 may be a general-purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

The memory 1702 may be configured to store a software program and a module. The processor 1701 runs the software program and the module that are stored in the memory 1702, to perform various function applications and data processing of the communication device 1700, for example, the communication method provided in embodiments of this application.

The memory 1702 may mainly include a program storage area and a data storage area. The program storage area may store an operating system, an application program of at least one application, and the like. The data storage area may be used to store user data, and the like. In addition, the memory 1702 may include a high-speed random access memory, and may further include a non-volatile memory, for example, at least one magnetic disk storage device, a flash memory device, or another volatile solid-state storage device.

The processor 1701 in the communication device 1700 is configured to run computer instructions or the program stored in the memory 1702, to perform a function in any one of the foregoing method embodiments. For example, if the communication device 1700 is a non-AP MLD, the processor 1701 may be configured to perform the following steps: receiving a BTM request sent by a current AP MLD, and initiating a tentative association operation for a candidate AP MLD based on function indication information of the candidate AP MLD that is carried in the BTM request. Alternatively, the processor 1701 may be configured to perform the following steps: receiving a BTM request sent by a current AP MLD, where the BTM request includes request mode indication information; and if the request mode indication information indicates the non-AP MLD to perform the tentative association operation, initiating a tentative association operation for a candidate AP MLD, where the candidate AP MLD is a neighboring AP MLD of the current AP MLD.

If the communication device 1700 is an AP MLD, the processor 1701 may be configured to perform the following steps: sending a BTM request to a non-AP MLD, and receiving a BTM response sent by the non-AP MLD. The BTM request includes function indication information of a candidate AP MLD, the candidate AP MLD is a neighboring AP MLD of the current AP MLD, and the function indication information indicates whether the candidate AP MLD supports a tentative association operation. Alternatively, the processor 1701 may be configured to perform the following steps: sending a BTM request to a non-AP MLD, and receiving a BTM response sent by the non-AP MLD. The BTM request includes request mode indication information, and the request mode indication information indicates the non-AP MLD to perform a tentative association operation or a basic service set BSS transition operation.

In some embodiments, the processor 1701 may include one or more processing units, and different processing units may be independent devices, or may be integrated into one or more processors. The processor 1701 may further include a controller. The controller may generate an operation control signal based on instruction operation code and a time sequence signal, to complete control of instruction fetching and instruction execution.

In an embodiment, the communication device 1700 may further include a communication module, and the communication module is configured to communicate with another device in a network.

In some other embodiments, if the communication device 1700 is a non-AP MLD, the communication device may alternatively use the structure of the non-AP MLD shown in FIG. 1 or FIG. 2. If the communication device 1700 is an AP MLD, the communication device may alternatively use the structure of the AP MLD shown in FIG. 1 or FIG. 2. Details are not described herein again.

It may be understood that the structure shown in this embodiment of this application does not constitute a specific limitation on the network device. In some other embodiments of this application, the chip may include more or fewer components than those shown in the figure, or some components may be combined, or some components may be split, or there may be a different component layout. The components shown in the figure may be implemented by hardware, software, or a combination of software and hardware.

Based on a same technical concept as the foregoing method embodiments, an embodiment of this application further provides a communication system. The communication system may be the communication system shown in FIG. 1, and the communication system may include at least one non-AP MLD and at least two AP MLDs.

Each AP MLD may perform the following steps: sending a BTM request to the non-AP MLD, and receiving a BTM response sent by the non-AP MLD. The BTM request includes function indication information of a candidate AP MLD, the candidate AP MLD is a neighboring AP MLD of the current AP MLD, and the function indication information indicates whether the candidate AP MLD supports a tentative association operation. Alternatively, the following steps may be performed: sending a BTM request to a non-AP MLD, and receiving a BTM response sent by the non-AP MLD. The BTM request includes request mode indication information, and the request mode indication information indicates the non-AP MLD to perform a tentative association operation or a basic service set BSS transition operation.

Each non-AP MLD may perform the following steps: receiving a BTM request sent by a current AP MLD, and initiating a tentative association operation for a candidate AP MLD based on function indication information of the candidate AP MLD that is carried in the BTM request; or may perform the following steps: receiving a BTM request sent by a current AP MLD, where the BTM request includes request mode indication information; and if the request mode indication information indicates the non-AP MLD to perform the tentative association operation, initiating a tentative association operation for a candidate AP MLD, where the candidate AP MLD is a neighboring AP MLD of the current AP MLD.

An embodiment of this application further provides a computer program product. The computer program product includes computer-executable instructions. In an embodiment, the computer-executable instructions are used to enable a computer to perform functions in the foregoing method embodiments.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform functions in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state drive.

In embodiments of this application, unless otherwise stated or there is a logical conflict, terms and/or descriptions between different embodiments are consistent and may be mutually referenced, and technical features in different embodiments may be combined according to an internal logical relationship thereof, to form a new embodiment. In addition, the terms "include" and "have" and any variants thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clear that a person skilled in the art can make various modifications and variations to this application without departing from the scope of this application. In this case, this application is intended to cover these modifications and variations of embodiments of this application provided that they fall within the scope of protection defined by the claims of this application and their equivalent technologies.

## Claims

1. A communication method, applied to a non-access point multi-link device non-AP MLD, wherein the non-AP MLD is connected to a current access point multi-link device AP MLD, and the method comprises:
receiving a basic service set transition management BTM request sent by the current AP MLD, wherein the BTM request comprises function indication information of a candidate AP MLD, the candidate AP MLD is a neighboring AP MLD of the current AP MLD, and the function indication information indicates whether the candidate AP MLD supports a tentative association operation; and
initiating a tentative association operation for the candidate AP MLD based on the function indication information of the candidate AP MLD.

2. The method according to claim 1, wherein the function indication information is carried in a neighbor report element field of the BTM request.

3. The method according to claim 1 or 2, wherein the function indication information comprises a first function indication bit, the first function indication bit indicates whether the candidate AP MLD supports a first-type tentative association operation, and the first-type tentative association operation is a tentative association operation performed through an air interface.

4. The method according to claim 3, wherein initiating the tentative association operation for the candidate AP MLD based on the function indication information of the candidate AP MLD comprises:
if the first function indication bit indicates that the candidate AP MLD supports the first-type tentative association operation, performing the tentative association operation for the candidate AP MLD through the air interface.

5. The method according to any one of claims 1 to 4, wherein the function indication information comprises a second function indication bit, the second function indication bit indicates whether the candidate AP MLD supports a second-type tentative association operation, and the second-type tentative association operation is a tentative association operation performed through a distributed system DS.

6. The method according to claim 5, wherein initiating the tentative association operation for the candidate AP MLD based on the function indication information of the candidate AP MLD comprises:
if the second function indication bit indicates that the candidate AP MLD supports the second-type tentative association operation, performing the tentative association operation for the candidate AP MLD through the DS.

7. The method according to claim 5, wherein initiating the tentative association operation for the candidate AP MLD based on the function indication information of the candidate AP MLD comprises:
if the first function indication bit indicates that the candidate AP MLD supports the first-type tentative association operation, and the second function indication bit indicates that the candidate AP MLD does not support the second-type tentative association operation, performing the tentative association operation for the candidate AP MLD through the air interface.

8. The method according to any one of claims 1 to 7, wherein the BTM request comprises request mode indication information, and initiating the tentative association operation for the candidate AP MLD based on the function indication information of the candidate AP MLD comprises:
if the request mode indication information indicates the non-AP MLD to perform a tentative association operation, initiating the tentative association operation for the candidate AP MLD based on the function indication information of the candidate AP MLD.

9. The method according to claim 8, wherein the method further comprises:
if the request mode indication information indicates the non-AP MLD to perform a basic service set BSS transition operation, performing the BSS transition operation, to connect to a network through a target AP MLD after BSS transition.

10. The method according to claim 8 or 9, wherein the request mode indication information is carried in a request mode field of the BTM request.

11. A communication method, applied to a non-access point multi-link device non-AP MLD, wherein the non-AP MLD is connected to a current access point multi-link device AP MLD, and the method comprises:
receiving a basic service set transition management BTM request sent by the current AP MLD, wherein the BTM request comprises request mode indication information, and the request mode indication information indicates the non-AP MLD to perform a tentative association operation or a basic service set BSS transition operation; and
if the request mode indication information indicates the non-AP MLD to perform the tentative association operation, initiating a tentative association operation for a candidate AP MLD, wherein the candidate AP MLD is a neighboring AP MLD of the current AP MLD.

12. The method according to claim 11, wherein the method further comprises:
if the request mode indication information indicates the non-AP MLD to perform the BSS transition operation, performing the BSS transition operation, to connect to a network through a target AP MLD after BSS transition.

13. The method according to claim 11 or 12, wherein the request mode indication information is carried in a request mode field of the BTM request.

14. A communication method, applied to a current access point multi-link device AP MLD of a non-access point multi-link device non-AP MLD, wherein the method comprises:
sending a basic service set transition management BTM request to the non-AP MLD, wherein the BTM request comprises function indication information of a candidate AP MLD, the candidate AP MLD is a neighboring AP MLD of the current AP MLD, and the function indication information indicates whether the candidate AP MLD supports a tentative association operation; and
receiving a BTM response sent by the non-AP MLD.

15. The method according to claim 14, wherein the function indication information is carried in a neighbor report element field of the BTM request.

16. The method according to claim 14 or 15, wherein the function indication information comprises a first function indication bit, the first function indication bit indicates whether the candidate AP MLD supports a first-type tentative association operation, and the first-type tentative association operation is a tentative association operation performed through an air interface.

17. The method according to any one of claims 14 to 16, wherein the function indication information comprises a second function indication bit, the second function indication bit indicates whether the candidate AP MLD supports a second-type tentative association operation, and the second-type tentative association operation is a tentative association operation performed through a distributed system DS.

18. The method according to any one of claims 14 to 17, wherein the BTM request comprises request mode indication information, and the request mode indication information indicates the non-AP MLD to perform a tentative association operation or a basic service set BSS transition operation.

19. The method according to claim 18, wherein the request mode indication information is carried in a request mode field of the BTM request.

20. A communication method, applied to a current access point multi-link device AP MLD of a non-access point multi-link device non-AP MLD, wherein the method comprises:
sending a basic service set transition management BTM request to the non-AP MLD, wherein the BTM request comprises request mode indication information, and the request mode indication information indicates the non-AP MLD to perform a tentative association operation or a basic service set BSS transition operation; and
receiving a BTM response sent by the non-AP MLD.

21. The method according to claim 20, wherein the request mode indication information is carried in a request mode field of the BTM request.

22. A communication apparatus, used in a non-access point multi-link device non-AP MLD, wherein the non-AP MLD is connected to a current access point multi-link device AP MLD, and the apparatus comprises a module configured to perform the method according to any one of claims 1 to 10, or a module configured to perform the method according to any one of claims 11 to 13.

23. A communication apparatus, used in a current access point multi-link device AP MLD of a non-access point multi-link device non-AP MLD, wherein the apparatus comprises a module configured to perform the method according to any one of claims 14 to 19, or a module configured to perform the method according to claim 20 or 21.

24. A communication device, wherein the communication device is a non-access point multi-link device non-AP MLD, the non-AP MLD is connected to a current access point multi-link device AP MLD, the communication device comprises a memory and a processor, the memory stores a computer program, and the processor is configured to execute the computer program stored in the memory, to implement the method according to any one of claims 1 to 10, or perform the method according to any one of claims 11 to 13.

25. A communication device, wherein the communication device is a current access point multi-link device AP MLD of a non-access point multi-link device non-AP MLD, the communication device comprises a memory and a processor, the memory stores a computer program, and the processor is configured to execute the computer program stored in the memory, to implement the method according to any one of claims 14 to 19, or perform the method according to claim 20 or 21.

26. A communication system, comprising a non-access point multi-link device non-AP MLD and an access point multi-link device AP MLD, wherein the non-AP MLD is configured to execute a computer program, to implement the method according to any one of claims 1 to 10, or perform the method according to any one of claims 11 to 13, and the AP MLD is configured to execute a computer program, to implement the method according to any one of claims 14 to 19, or perform the method according to claim 20 or 21.

27. A computer-readable storage medium, storing computer-executable instructions, wherein the computer-executable instructions are used to enable a computer to perform the method according to any one of claims 1 to 13 or the method according to any one of claims 14 to 21.

28. A computer program product, comprising computer-executable instructions, wherein the computer-executable instructions are used to enable a computer to perform the method according to any one of claims 1 to 13 or the method according to any one of claims 14 to 21.
